(19) Europäisches Patentamt
European Patent Office
Office européen des brevets

(11) EP 4 535 793 A1

# (12) EUROPEAN PATENT APPLICATION
published in accordance with Art. 153(4) EPC

(43) Date of publication:
**09.04.2025 Bulletin 2025/15**

(21) Application number: **22944336.1**

(22) Date of filing: **02.06.2022**

(51) International Patent Classification (IPC):
***H04N 19/82*** *(2014.01)* ***H04N 19/117*** *(2014.01)*
***H04N 19/176*** *(2014.01)*

(52) Cooperative Patent Classification (CPC):
**H04N 19/117; H04N 19/176; H04N 19/82**

(86) International application number:
**PCT/CN2022/096929**

(87) International publication number:
**WO 2023/231008 (07.12.2023 Gazette 2023/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **DAI, Zhenyu**
**Dongguan, Guangdong 523860 (CN)**

(74) Representative: **RGTH**
**Patentanwälte PartGmbB**
**Neuer Wall 10**
**20354 Hamburg (DE)**

## (54) ENCODING AND DECODING METHOD, ENCODER, DECODER AND STORAGE MEDIUM

(57) Embodiments of the present application provide a decoding method, in which a decoder decodes a bitstream and determines first flag information. In a case where the first flag information indicates that a scaling factor generated by a neural network is used for a current color component of a current frame of a current sequence, second flag information is determined; in a case where the second flag information indicates that the scaling factor generated by the neural network is used for a current block of the current color component, a scaling factor corresponding to the current block is determined using a scaling factor generation network, where the scaling factor generation network is used to predict a scaling factor of a picture block; and a reconstructed block of the current block is determined according to the scaling factor.

Decode a bitstream, and determine first flag information
101
Determine, in a case where the first flag information indicates that a scaling factor generated by a neural network is used for a current color component of a current frame of a current sequence, second flag information
102
Determine, in a case where the second flag information indicates that the scaling factor generated by the neural network is used for a current block of the current color component, a scaling factor corresponding to the current block using a scaling factor generation network
103
Determine, a reconstructed block of the current block according to the scaling factor
104

FIG. 6

EP 4 535 793 A1

**Description**

## TECHNICAL FIELD

Embodiments of the present application relate to the field of picture processing technology, and in particular to coding and decoding methods, an encoder, a decoder, and a storage medium.

## BACKGROUND

In recent years, with the development of deep learning technology, the exploration of neural network-based loop filters has gradually begun. For a loop filtering module, many high-performance neural network loop filtering tools have been proposed to optimize the filtering of input reconstructed pictures. In order to obtain better filtering optimization effect, an artificially defined scaling factor (SF) is further introduced. SF performs scaling calculation on the residual between a network output picture and an original input reconstructed picture, making a final output picture closer to the original picture.

However, the current common process of using scaling factors has poor flexibility and applicability, which reduces the coding performance, and the compression and transmission of the scaling factors also greatly reduce the coding efficiency.

## SUMMARY

Coding and decoding methods, an encoder, a decoder, and a storage medium are provided in the embodiments of the present application, which enhance the flexibility and applicability of a scaling factor, and are capable of improving the coding performance while improving the coding efficiency.

The technical solutions of the embodiments of the present application may be implemented as follows.

In a first aspect, a decoding method is provided in the embodiments of the present application, applied to a decoder, and the method includes:

decoding a bitstream, and determining first flag information;
determining, in a case where the first flag information indicates that a scaling factor generated by a neural network is used for a current color component of a current frame of a current sequence, second flag information;
determining, in a case where the second flag information indicates that the scaling factor generated by the neural network is used for a current block of the current color component, a scaling factor corresponding to the current block using a scaling factor generation network, where the scaling factor generation network is used to predict a scaling factor of a picture block; and
determining a reconstructed block of the current block according to the scaling factor.

In a second aspect, a coding method is provided in the embodiments of the present application, applied to an encoder, and the method includes:

determining first flag information;
determining, in a case where the first flag information indicates that a scaling factor generated by a neural network is used for a current color component of a current frame of a current sequence, second flag information;
determining, in a case where the second flag information indicates that the scaling factor generated by the neural network is used for a current block of the current color component, a scaling factor corresponding to the current block using a scaling factor generation network, where the scaling factor generation network is used to predict a scaling factor of a picture block; and
determining a reconstructed block of the current block according to the scaling factor.

In a third aspect, a decoder is provided in the embodiments of the present application, and the decoder includes: a decoding part, and a first determination part, where

the decoding part is configured to decode a bitstream; and
the first determination part is configured to: determine first flag information; determine, in a case where the first flag information indicates that a scaling factor generated by a neural network is used for a current color component of a current frame of a current sequence, second flag information; determine, in a case where the second flag information indicates that the scaling factor generated by the neural network is used for a current block of the current color component, a scaling factor corresponding to the current block using a scaling factor generation network, where the scaling factor generation network is used to predict a scaling factor of a picture block; and determine, a reconstructed block of the current block according to the scaling factor.

In a fourth aspect, a decoder is provided in the embodiments of the present application, and the encoder includes a first processor and a first memory having stored instructions executable by the first processor. The instructions, when being executed by the first processor, implement the decoding method as described above.

In a fifth aspect, an encoder is provided in the embodiments of the present application, and the encoder includes: a second determination part, where

the second determination part is configured to: determine first flag information; determine, in a case where the first flag information indicates that a scaling factor generated by a neural network is used for a current color component of a current frame of a current sequence, second flag information; determine, in a case where the second flag information indicates that the scaling factor generated by the neural network is used for a current block of the current color component, a scaling factor corresponding to the current block using a scaling factor generation network, where the scaling factor generation network is used to predict a scaling factor of a picture block; and determine, a reconstructed block of the current block according to the scaling factor.

In a sixth aspect, an encoder is provided in the embodiments of the present application, and the encoder includes a second processor and a second memory having stored instructions executable by the second processor. The instructions, when being executed by the second processor, implement the coding method as described above.

In a seventh aspect, a computer storage medium is provided in the embodiments of the present application, the computer storage medium has stored a computer program, and when being executed by a first processor, the computer program implements the decoding method as described in the first aspect, or when being executed by a second processor, the computer program implements the coding method as described in the second aspect.

The coding and decoding methods, the decoder, the encoder, and the storage medium are provided in the embodiments of the present application. The decoder decodes the bitstream and determines the first flag information; the decoder determines, in a case where the first flag information indicates that the scaling factor generated by the neural network is used for the current color component of the current frame of the current sequence, the second flag information; the decoder determines, in a case where the second flag information indicates that the scaling factor generated by the neural network is used for the current block of the current color component, the scaling factor corresponding to the current block using the scaling factor generation network, where the scaling factor generation network is used to predict the scaling factor of the picture block; and the decoder determines the reconstructed block of the current block according to the scaling factor. The encoder determines the first flag information; the encoder determines, in a case where the first flag information indicates that the scaling factor generated by the neural network is used for the current color component of the current frame of the current sequence, the second flag information; the encoder determines, in a case where the second flag information indicates that the scaling factor generated by the neural network is used for the current block of the current color component, the scaling factor corresponding to the current block using the scaling factor generation network, where the scaling factor generation network is used to predict the scaling factor of the picture block; and the encoder determines the reconstructed block of the current block according to the scaling factor. That is to say, in the embodiments of the present application, the codec may use the scaling factor generation network at both the coding and decoding sides to predict and obtain a learning-based scaling factor of the picture block, for correcting the residual corresponding to the picture block to obtain a reconstructed block that is closer to the original picture, which enhance the flexibility and applicability of the scaling factor, and are capable of improving the coding performance while improving the coding efficiency.

## BRIEF DESCRIPTION OF THE DRAWINGS

FIG. 1 is a schematic diagram of an application of a coding framework provided by the related art.

FIG. 2 is a schematic diagram of a network structure in which a loop filter with a multi-layer convolutional network performs filtering optimization on an input reconstructed picture.

FIG. 3 is a schematic diagram of a network structure using a multi-layer residual network.

FIG. 4 is a block diagram of system composition of an encoder provided in the embodiments of the present application.

FIG. 5 is a block diagram of system composition of a decoder provided in the embodiments of the present application.

FIG. 6 is a first schematic flowchart of an implementation of a decoding method.

FIG. 7 is a second schematic flowchart of an implementation of a decoding method.

FIG. 8 is a first schematic diagram of a network structure of a scaling factor generation network.

FIG. 9 is a second schematic diagram of a network structure of a scaling factor generation network.

FIG. 10 is a schematic diagram of an application of a coding framework proposed in the embodiments of the present application.

FIG. 11 is a schematic diagram of an overall framework of a loop filtering module.

FIG. 12 is a schematic flowchart of an implementation of a coding method.

FIG. 13 is a first schematic diagram of compositional structures of a decoder proposed in the embodiments of the present application.

FIG. 14 is a second schematic diagram of compositional structures of a decoder proposed in the embodiments of the present application.

FIG. 15 is a first schematic diagram of compositional structures of an encoder proposed in the embodiments of the present application.

FIG. 16 is a second schematic diagram of compositional structures of an encoder proposed in the embodiments of the present application.

## DETAILED DESCRIPTION

The technical solutions in the embodiments of the present application will be clearly and completely described below in conjunction with the drawings in the embodiments of the present application. It may be understood that the specific embodiments described herein are only intended to explain the relevant disclosures, rather than to limit the disclosures. Furthermore, it should also be noted that for the convenience of descriptions, only parts related to the relevant disclosures are shown in the drawings.

In the following descriptions, reference is made to "some embodiments" which describe a subset of all possible embodiments, however, it may be understood that "some embodiments" may be the same subset or different subsets of all possible embodiments, and may be combined with each other without conflict. It should also be noted that the terms "first \second\third" involved in the embodiments of the present application are only intended to distinguish similar objects and do not indicate a specific ordering of the objects. It may be understood that "first\second\third" may be interchanged in a specific order or sequence if allowable, so that the embodiments of the present application described here may be implemented in an order other than that shown or described here.

Digital video compression technology is mainly used to compress huge digital image video data to facilitate transmission and storage. With the surge in Internet videos and people's increasing demand for video clarity, although the existing digital video compression standards can save a lot of video data, there is still a need to pursue better digital video compression technology to reduce the bandwidth and traffic pressure of digital video transmission.

In a digital video coding process, an encoder reads unequal samples (pixels) for original video sequences of different color formats, including luma components and chrominance components, that is, the encoder reads a black-and-white or color picture. After that, the picture is divided into blocks and block data is handed over to the encoder for coding.

Common video coding and decoding standards are based on the use of a block-based hybrid coding framework. Each frame in a video picture is partitioned into square largest coding units (LCU) of the same size (e.g., $128\times128$, or $64\times64$) or coding tree units (CTU), in which each largest coding unit or coding tree unit may be further divided into rectangular coding units (CU) according to rules; and a coding unit may be further divided into smaller units, such as a prediction unit (PU), and a transform unit (TU).

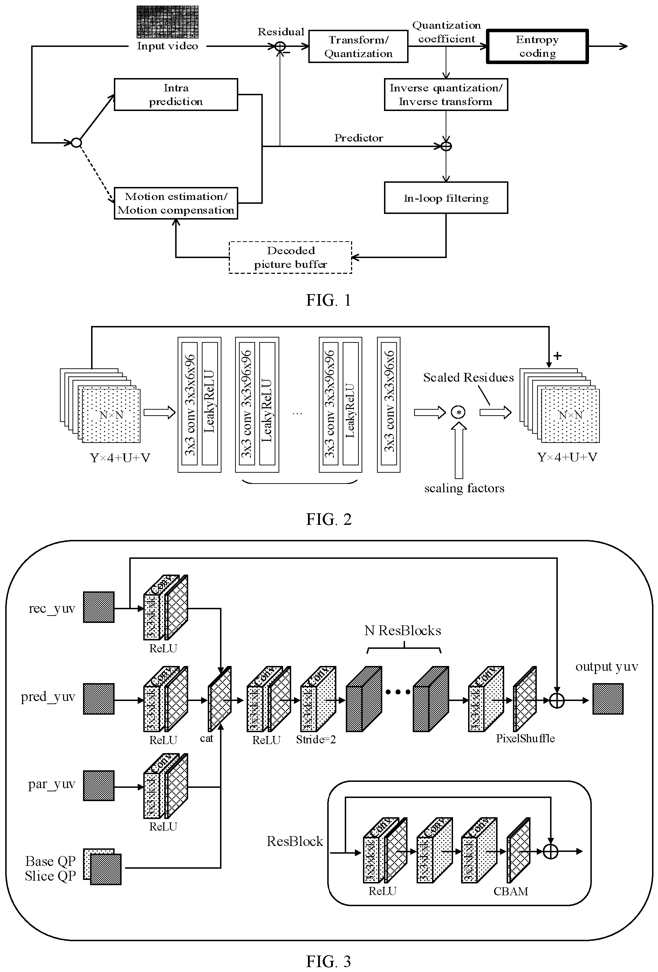

FIG. 1 is a schematic diagram of an application of a coding framework provided by the related art. As shown in FIG. 1, a hybrid coding framework may include a prediction module, a transform module, a quantization module, an entropy coding module, a loop filter (in-loop filter) module, and other modules. The prediction module may include intra prediction and inter prediction, where the inter prediction may include motion estimation and motion compensation. Since there is a strong correlation between neighbouring samples within a frame of a video picture, the use of an intra prediction mode in video coding and decoding technologies can eliminate a spatial redundancy between neighbouring samples. Moreover, since there is also a strong similarity between neighbouring frames in a video picture, the use of an inter prediction mode in the video coding and decoding technologies can eliminate a temporal redundancy between neighbouring frames, thereby improving coding and decoding efficiency. A basic process of a video codec is as follows: at a coding side, a picture of a frame is divided into blocks, where intra prediction or inter prediction is used for a current block to generate a prediction block of the current block; and an original block of the current block is subtracted from the prediction block to obtain a residual block, transform and quantization is performed on the residual block to obtain a quantization coefficient matrix, and the quantization coefficient matrix is entropy encoded and then output to a bitstream. At a decoding side, the intra prediction or inter prediction is used for the current block to generate a prediction block of the current block. Furthermore, the bitstream is decoded to obtain the quantization coefficient matrix, inverse quantization and inverse transform are performed on the quantization coefficient matrix to obtain a residual block, and the prediction block and the residual block are added together to obtain a reconstructed block. Reconstructed blocks constitute a reconstructed picture, and loop filtering is performed on the reconstructed picture based on a picture or a block to obtain a decoded picture. The coding side also needs to perform operations similar to those of the decoding side to obtain the decoded picture. The decoded picture may be used as a reference frame for inter prediction for subsequent frames. Block partitioning information, prediction, transform, quantization, entropy coding, loop filtering and other mode information or parameter information determined by the coding side need to be input into the bitstream if necessary. By parsing and analyzing the existing information, the decoding side determines the same mode information or parameter information as the coding side, such as block partitioning information, prediction, transform, quantization, entropy coding, and loop filtering, thereby ensuring that the decoded picture obtained by the coding side is the same as the decoded picture obtained by the decoding side. The decoded picture obtained by the coding side is usually also called a reconstructed picture. The current block may be divided into prediction units during prediction, and may be divided into transform units during transform, in which the prediction units may have a different division as the transform units. The above is the basic process of the video codec in the block-based hybrid coding framework. With the development of technologies, some modules or steps of the framework or process may be optimized. The embodiments of the present application are applicable to the basic process of the video codec in the block-based hybrid coding framework, but are not limited to the framework and process.

It can be understood that the intra prediction only refers information of the same frame picture, and predicts sample information within the current division block, to eliminate spatial redundancy; the inter prediction may refer to the picture information of different frames, and use the motion estimation to search for motion vector information that best matches the current division block, to eliminate temporal redundancy; the transform converts the predicted picture block to a frequency domain, redistributes the energy, and combines quantization to remove information that the human eye is not sensitive to, to eliminate visual redundancy; the entropy coding may eliminate character redundancy based on a current context model and probability information of the binary bitstream; and the loop filtering mainly processes samples after inverse transform and inverse quantization to compensate for distortion information, providing a better reference for subsequent coded samples.

In versatile video coding (VVC), the traditional loop filtering module mainly includes tools, such as a deblocking filter (DBF), a sample adaptive offset (SAO) and an adaptive loop filter (ALF). In recent years, with the development of deep learning technology, the exploration of neural network-based loop filters has gradually begun.

In the research work of VVC, a neural network-based video coding (NNVC) exploration experiment (EE) group is set up. For the loop filtering module, FIG. 2 shows a schematic diagram of a network structure in which a loop filter with a multi-layer convolutional network performs filtering optimization on an input reconstructed picture. As shown in FIG. 2, an artificially defined scaling factor (SF) is introduced to compare a network output picture with the original input reconstructed picture, and the residual between the two is scaled and calculated, so that the final output picture is closer to the original picture, bringing better coding performance.

FIG. 3 shows a schematic diagram of a network structure using a multi-layer residual network. As shown in FIG. 3, block partitioning information, prediction information, and quantization parameter (QP) information are introduced as network inputs, and the network also has good coding performance. The network here uses the same form of the scaling factor to achieve better performance.

In the above embodiments, a certain calculation formula is defined to derive the scaling factor, and the specific formula is as follows.

Assuming that a picture has the width of W and the height of H, and (x, y) represents the coordinates of the sample, where x is the horizontal coordinate and y is the vertical coordinate, the reconstructed picture input to the neural network is rec(x, y), the filtered picture output by the neural network is cnn(x, y), and the original picture is org(x, y).

The calculation of the scaling factor is based on the coding unit. For example, for the coding tree unit (CTU), assuming that the current picture has a total of N CTUs and a serial number of the current CTU is i, a residual between CTUs at corresponding locations of the two pictures is first calculated as follows:

$$orgResi(i) = \left[org(x_i, y_i) - rec(x_i, y_i)\right] \quad (1)$$

$$cnnResi(i) = \left[cnn(x_i, y_i) - rec(x_i, y_i)\right] \quad (2)$$

All CTUs are then traversed and various forms of weighted sums are done on the residual of the entire picture, as shown in the following formulas:

$$\text{sum_orgResi} = \sum_{i}^{N} orgResi(i) \quad (3)$$

$$\text{sum_cnnResi} = \sum_{i}^{N} cnnResi(i) \quad (4)$$

$$\text{sum_cnnMulti} = \sum_{i}^{N} \left( cnnResi(i) \times cnnResi(i) \right) \quad (5)$$

$$\text{sum_crossMulti} = \sum_{i}^{N} \left( cnnResi(i) \times orgResi(i) \right) \quad (6)$$

Finally, the one-dimensional scaling factor (SF) at the picture-level is calculated statistically by the least square method, as shown in the following formula:

$$\text{SF} = \frac{W \times H \times \text{sum_crossMulti} - \text{sum_orgResi} \times \text{sum_cnnResi}}{W \times H \times \text{sum_cnnMulti} - \text{sum_cnnResi} \times \text{sum_cnnResi}} \quad (7)$$

According to the derived SF, the residuals of the reconstructed picture and the filtered picture are corrected to obtain the final output picture *output* ($x_i$, $y_i$) , as shown in the following formula:

$$output(x_i, y_i) = rec(x_i, y_i) + SF \times [cnn(x_i, y_i) - rec(x_i, y_i)] \quad (8)$$

The scaling factor itself needs to be coded with a certain number of bits after being derived at the coding side, and then can be used after being parsed at the decoding side.

In order to obtain better performance, the scaling factor is introduced in the neural network-based loop filtering tools. However, in the process of using the scaling factor, the derivation method of the scaling factor is often manually defined, and the calculation method is relatively fixed. The derived statistical picture-level scaling factor will be applied to all CTUs of the entire picture, but the scaling factor applied to the entire picture is not necessarily the most suitable scaling factor for each CTU. Moreover, a certain number of bits are required to be consumed to code the scaling factor, and for calculating the picture-level scaling factor, it is necessary to traverse all CTUs of the entire picture before processing the current picture, which results in a large delay problem.

That is to say, in the above embodiments, the flexibility and applicability of the use of the scaling factor are poor, which reduces the coding performance, and the compression and transmission of the scaling factor also greatly reduces the coding efficiency.

For the above problems, the embodiments of the present application provide coding and decoding methods, a decoder, an encoder, and a storage medium. The decoder decodes a bitstream and determines first flag information; the decoder determines, in a case where the first flag information indicates that a scaling factor generated by a neural network is used for a current color component of a current frame of a current sequence, second flag information; the decoder determines, in a case where the second flag information indicates that the scaling factor generated by the neural network is used for a current block of the current color component, a scaling factor corresponding to the current block using a scaling factor generation network, where the scaling factor generation network is used to predict a scaling factor of a picture block; and the decoder determines a reconstructed block of the current block according to the scaling factor. The encoder determines the first flag information; the encoder determines, in a case where the first flag information indicates that the scaling factor generated by the neural network is used for the current color component of the current frame of the current sequence, the second flag information; the encoder determines, in a case where the second flag information indicates that the scaling factor generated by the neural network is used for the current block of the current color component, the scaling factor corresponding to the current block using the scaling factor generation network, where the scaling factor generation network is used to predict the scaling factor of the picture block; and the encoder determines the reconstructed block of the current block according to the scaling factor. That is to say, in the embodiments of the present application, the codec may use the scaling factor generation network at both the coding and decoding sides to predict and obtain a learning-based scaling factor of the picture block, for correcting the residual corresponding to the picture block to obtain a reconstructed block that is closer to the original picture, which enhance the flexibility and applicability of the scaling factor, and are capable of improving the coding performance while improving the coding efficiency.

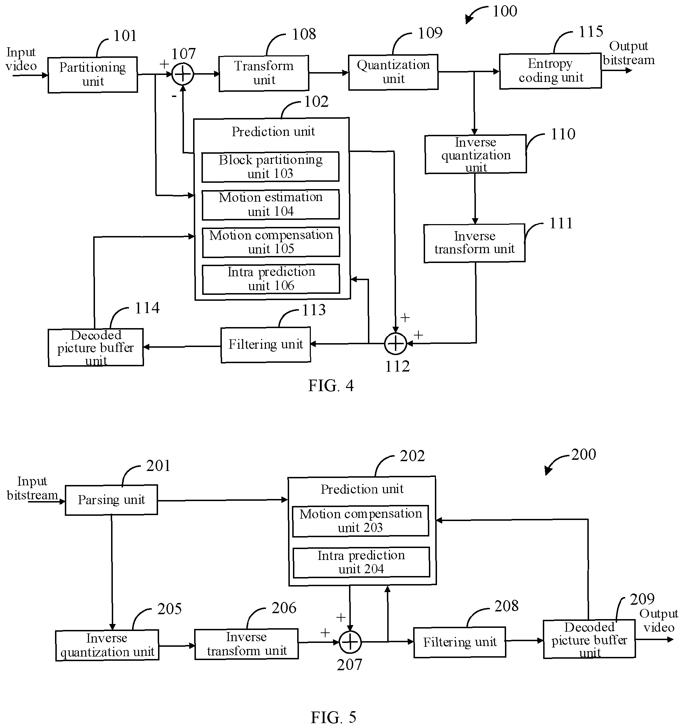

Refer to FIG. 4, an example of a block diagram of system composition of an encoder provided in the embodiments of the present application is shown. As shown in FIG. 4, the encoder 100 may include: a partitioning unit 101, a prediction unit 102, a first adder 107, a transform unit 108, a quantization unit 109, an inverse quantization unit 110, an inverse transform unit 111, a second adder 112, a filtering unit 113, a decoded picture buffer (DPB) unit 114, and an entropy coding unit 115. Here, the input of the encoder 100 may be a video consisting of a series of pictures or a static picture, and the output of the encoder 100 may be a bitstream (also referred to as a "code stream") for representing a compressed version of the input video.

The partitioning unit 101 partitions a picture in the input video into one or more coding tree units (CTUs). The partitioning unit 101 divides the picture into a plurality of blocks(or tiles), and may further divide a tile into one or more bricks. Here, a tile or a brick may include one or more complete and/or partial CTUs. In addition, the partitioning unit 101 may form one or more slices, where a slice may include one or more tiles arranged in a grid order in the picture, or cover one or more tiles in a rectangular area in the picture. The partitioning unit 101 may further form one or more sub-pictures, where a sub-picture may include one or more slices, tiles or bricks.

During the coding process of the encoder 100, the partitioning unit 101 transmits the CTU(s) to the prediction unit 102. Generally, the prediction unit 102 may be composed of a block partitioning unit 103, a motion estimation (ME) unit 104, a motion compensation (MC) unit 105, and an intra prediction unit 106. Specifically, the block partitioning unit 103 iteratively uses quadtree partitioning, binary tree partitioning, and ternary tree partitioning to further partition the input CTU into smaller coding units (CUs). The prediction unit 102 may obtain an inter prediction block of the CUs using the ME unit 104 and the MC unit 105. The intra prediction unit 106 may obtain an intra prediction block of a CU using various intra prediction modes including the matrix weighted intra prediction (MIP) mode. In an example, a rate-distortion optimized motion estimation approach may be invoked by the ME unit 104 and the MC unit 105 to obtain the inter prediction block, and a rate-distortion optimized mode determination approach may be invoked by the intra prediction unit 106 to obtain an intra prediction block.

The prediction unit 102 outputs the prediction block of the CU, and the first adder 107 calculates the difference between the CU in the output of the partitioning unit 101 and the prediction block of the CU, that is, a residual CU. The transform unit 108 reads the residual CU and performs one or more transform operations on the residual CU to obtain coefficients. The quantization unit 109 quantizes the coefficients and outputs quantization coefficients (i.e., levels). The inverse quantization unit 110 performs a scaling operation on the quantization coefficients to output reconstruction coefficients. The inverse transform unit 111 performs one or more inverse transforms corresponding to the transform(s) in the transform unit 108 and outputs a reconstructed residual. The second adder 112 calculates a reconstructed CU by adding the reconstructed residual and the prediction block of the CU from the prediction unit 102. The second adder 112 further transmits its output to the prediction unit 102 to be used as an intra prediction reference. After all CUs in the picture or the sub-picture are reconstructed, the filtering unit 113 performs loop filtering on the reconstructed picture or sub-picture. Here, the filtering unit 113 includes one or more filters, such as a deblocking filter, a sample adaptive offset (SAO) filter, an adaptive loop filter (ALF), a luma mapping with chroma scaling (LMCS) filter, and a neural network-based filter. Alternatively, in a case where the filtering unit 113 determines that the CU is not used as a reference in coding other Cus, the filtering unit 113 performs the loop filtering on one or more target samples in the CU.

The output of the filtering unit 113 is decoded pictures or sub-pictures, and these decoded pictures or sub-pictures are buffered in the DPB unit 114. The DPB unit 114 outputs the decoded pictures or sub-pictures according to timing and control information. Here, the pictures stored in the DPB unit 114 may also be used as a reference for the prediction unit 102 to perform the inter prediction or intra prediction. Finally, the entropy coding unit 115 converts the parameters (such as control parameters and supplementary information) required for the decoded picture from the encoder 100 into binary form, and writes such binary form into the bitstream according to the syntax structure of each data unit, that is, the encoder 100 finally outputs the bitstream.

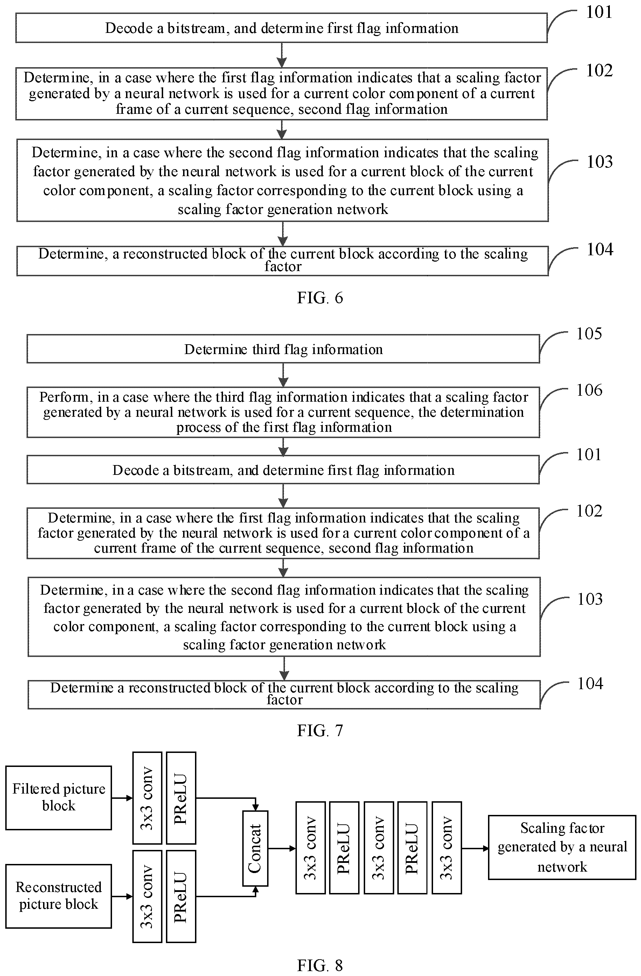

Further, the encoder 100 may be provided with a first processor and a first memory recording a computer program. When the first processor reads and runs the computer program, the encoder 100 reads the input video and generates a corresponding bitstream. In addition, the encoder 100 may also be a computing device having one or more chips. These units implemented as integrated circuits on a chip have similar connections and data exchange functions as the corresponding units in FIG. 8.

Refer to FIG. 5, an example of a block diagram of system composition of a decoder provided in the embodiments of the present application is shown. As shown in FIG. 5, the decoder 200 may include: a parsing unit 201, a prediction unit 202, an inverse quantization unit 205, an inverse transform unit 206, an adder 207, a filtering unit 208, and a decoded picture buffer unit 209. Here, the input of the decoder 200 is a bitstream representing a compressed version of a video or a static picture, and the output of the decoder 200 may be a decoded video consisting of a series of pictures or a decoded static picture.

The input bitstream of the decoder 200 may be the bitstream generated by the encoder 100. The parsing unit 201 parses the input bitstream and obtains values of the syntax elements from the input bitstream. The parsing unit 201 converts the binary representation of the syntax elements into digital values and transmits the digital values to units in the decoder 200 to obtain one or more decoded pictures. The parsing unit 201 may further parse one or more syntax elements from the input bitstream to display the decoded picture.

During the decoding process of the decoder 200, the parsing unit 201 transmits the values of the syntax elements and one or more variables set or determined according to the values of the syntax elements and used to obtain the one or more decoded pictures to the units in the decoder 200.

The prediction unit 202 determines a prediction block of a current decoding block (e.g., CU). Here, the prediction unit 202 may include a motion compensation unit 203 and an intra prediction unit 204. Specifically, in a case where the inter-frame decoding mode is indicated for decoding the current decoding block, the prediction unit 202 transmits the relevant parameter from the parsing unit 201 to the motion compensation unit 203 to obtain the inter prediction block; and in a case where the intra prediction mode (including the MIP mode indicated based on the MIP mode index value) is indicated for decoding the current decoding block, the prediction unit 202 transmits the relevant parameter from the parsing unit 201 to the intra prediction unit 204 to obtain the intra prediction block.

The inverse quantization unit 205 has the same function as the inverse quantization unit 110 in the encoder 100. The inverse quantization unit 205 performs a scaling operation on the quantization coefficients (i.e., levels) from the parsing unit 201 to obtain the reconstruction coefficients.

The inverse transform unit 206 has the same function as the inverse transform unit 111 in the encoder 100. The inverse transform unit 206 performs one or more transform operations (i.e., inverse operations of one or more transform operations performed by the inverse transform unit 111 in the encoder 100) to obtain the reconstructed residual.

The adder 207 performs an addition operation on its inputs (the prediction block from the prediction unit 202 and the reconstructed residual from the inverse transform unit 206) to obtain a reconstructed block of the current decoding block. The reconstructed block is further transmitted to the prediction unit 202 to be used as a reference for other blocks encoded in the intra prediction mode.

After all CUs in a picture or a sub-picture are reconstructed, the filtering unit 208 performs the loop filtering on the reconstructed picture or sub-picture. The filtering unit 208 includes one or more filters, such as a deblocking filter, a sampling adaptive offset filter, an adaptive loop filter, a luma mapping with chroma scaling filter, and a neural network-based filter. Alternatively, in a case where the filtering unit 208 determines that the reconstructed block is not used as a reference when other blocks are decoded, the filtering unit 208 performs the loop filtering on one or more target samples in the reconstructed block. Here, the output of the filtering unit 208 is a decoded picture or sub-picture, and the decoded picture or sub-picture is buffered in the DPB unit 209. The DPB unit 209 outputs the decoded picture or sub-picture according to the timing and control information. The pictures stored in the DPB unit 209 may further be used as a reference for performing inter prediction or intra prediction by the prediction unit 202.

Further, the decoder 200 may be provided with a second processor and a second memory recording a computer program. When the first processor reads and runs the computer program, the decoder 200 reads the input bitstream and generates a corresponding decoded video. In addition, the decoder 200 may also be a computing device having one or more chips. These units implemented as integrated circuits on the chip have similar connections and data exchange functions as the corresponding units in FIG. 5.

It should also be noted that in a case where the embodiments of the present application are applied to the encoder 100, the "current block" specifically refers to a current to-be-coded block in the video picture (also referred to as the "coding block" for short); and in a case where the embodiments of the present application is applied to the decoder 200, the "current block" specifically refers to a current to-be-decoded block in the video picture (also referred to as the "decoding block" for short).

Based on FIG. 4, the coding method in the embodiments of the present application is mainly applied to the "filtering unit 113" part in the encoder 100.

Based on FIG. 5, the decoding method in the embodiments of the present application is mainly applied to the "filtering unit 208" part in the decoder 200.

That is to say, the coding and decoding methods in the embodiments of the present application may be applied to a video coding system (referred to as "encoder" for short), a video decoding system (referred to as "decoder" for short), and even to both a video coding system and a video decoding system, which is not limited here.

The technical solutions in the embodiments of the present application will be clearly and completely described below in conjunction with the drawings in the embodiments of the present application.

An embodiment of the present application proposes a decoding method, which is applied to a decoder. FIG. 6 is a first schematic flowchart of an implementation of the decoding method. As shown in FIG. 6, the decoding method performed by the decoder may include the following steps:

step 101, decoding a bitstream, and determining first flag information.

In the embodiments of the present application, the decoder may determine the first flag information by decoding the bitstream.

It should be noted that in the implementation of the present application, the first flag information may be used to determine whether the scaling factor generated by the neural network is used for the current color component of the current frame of the current sequence. In a case where the scaling factor generated by the neural network is used for the current color component of the current frame of the current sequence, for at least one picture block in the current color component of the current frame of the current sequence, a scaling factor corresponding to the picture block may be generated, and then the scaling factor corresponding to the picture block may be used for subsequent decoding processing.

In the embodiments of the present application, the first flag information may be understood as a flag bit indicating whether the scaling factor generated by the neural network is used for at least one picture block in the current color component of the current frame of the current sequence, or the first flag information may be understood as a flag bit indicating whether the scaling factor corresponding to the picture block is used to determine the reconstructed block of the picture block for at least one picture block in the current color component of the current frame of the current sequence. Specifically, the decoder decodes the bitstream, and may determine a variable serving as the first flag information, so that the first flag information may be determined by the value of the variable.

It should be noted that in the present application, the value of the first flag information may be a first value or a second value. The different value of the first flag information results in a different manner of determining the reconstructed block of at least one picture block in the current color component of the current frame of the current sequence.

It can be understood that in the embodiments of the present application, based on the value of the first flag information, in decoding the current color component, the scaling factor generated by the neural network may be selected to be used, or the scaling factor generated by the neural network may not be selected to be used.

Exemplarily, in the present application, in a case where the value of the first flag information is the first value, the scaling factor generated by the neural network may be selected for the current color component of the current frame of the current sequence, and then the scaling factor determined based on the neural network may be used to complete the decoding process of the current color component; and in a case where the value of the first flag information is the second value, the scaling factor generated by the neural network may not be selected for the current color component of the current frame of the current sequence, and thus the scaling factor determined based on the neural network is not be used in the decoding process of the current color component.

Exemplarily, in the present application, in a case where the value of the first flag information is the first value, the scaling factor generated by the neural network may be selected for the current color component of the current frame of the current sequence, and then the scaling factor determined based on the neural network may be used to complete the decoding process of the current color component; alternatively, in a case where the value of the first flag information is the second value, the scaling factor generated by the neural network may not be selected for the current color component of the current frame of the current sequence, and thus the scaling factor determined based on the neural network is not be used in the decoding process of the current color component.

It should be noted that in the embodiments of the present application, the first value may be set to 1 and the second value may be set to 0; alternatively, the first value may also be set to "true" and the second value may be set to "false", which are not limited in the present application.

Further, in the embodiments of the present application, a flag picture_nnsf_enable_flag[compIdx] may be used to represent the first flag information, where compIdx may be used to represent the color component of the current frame of the current sequence.

For example, in the present application, in a case where the value of the picture_nnsf_enable_flag[compIdx] is 1, it may indicate that the scaling factor generated by the neural network is used for the current color component of the current frame of the current sequence, and then the scaling factor determined based on the neural network is used to complete the decoding process of the current color component.

For example, in the present application, in a case where the value of the picture_nnsf_enable_flag[compIdx] is 0, it may indicate that the scaling factor generated by the neural network is not used for the current color component of the current frame of the current sequence, and thus the scaling factor determined based on the neural network is not used in the decoding process of the current color component.

It should be noted that in the embodiments of the present application, the first flag information may be a picture-level flag, where the first flag information may be determined by decoding a bitstream.

Further, in an embodiment of the present application, FIG. 7 is a second schematic flowchart of an implementation of a decoding method. As shown in FIG. 7, the method for the decoder to perform the decoding processing may further include the following steps.

In step 105, third flag information is determined.

In step 106, in a case where the third flag information indicates that the scaling factor generated by the neural network is used for the current sequence, the determination process of the first flag information is performed.

In the embodiments of the present application, the third flag information may be determined first, and then it may be determined whether to further determine the first flag information based on the third flag information. In a case where the third flag information indicates that the scaling factor generated by the neural network is used for the current sequence, the first flag information may be determined by decoding the bitstream.

It should be noted that in the implementation of the present application, the third flag information may be used to determine whether to use the scaling factor generated by the neural network for the current sequence. That is, in a case where the scaling factor generated by the neural network is used for the current sequence, for at least one picture frame in the current sequence, a scaling factor corresponding to the picture block may be generated, and then the scaling factor corresponding to the picture block may be used for the subsequent decoding processing.

In the embodiments of the present application, the third flag information may be understood as a flag bit indicating whether the scaling factor generated by the neural network is used for at least one picture frame in the current sequence, or the third flag information may be understood as a flag bit indicating whether the scaling factor corresponding to the picture block is used to determine the reconstructed block of the picture block for at least one picture frame in the current sequence. Specifically, a variable serving as the third flag information may be determined, so that the third flag information may be determined by taking the value of the variable.

It should be noted that in the present application, the value of the third flag information may be a first value or a second value. The different value of the third flag information results in a different manner of determining the reconstructed block of the picture block of at least one picture frame in the current sequence.

It can be understood that in the embodiments of the present application, based on the value of the third flag information, in decoding the at least one picture frame in the current sequence, the scaling factor generated by the neural network may be selected to be used, or the scaling factor generated by the neural network may not be selected to be used.

Exemplarily, in the present application, in a case where the value of the third flag information is the first value, the scaling factor generated by the neural network may be selected for the current sequence, and then the scaling factor determined based on the neural network may be used to complete the decoding process of the current sequence; and in a case where the value of the third flag information is the second value, the scaling factor generated by the neural network may not be selected for the current color component of the current frame of the current sequence, and thus the scaling factor determined based on the neural network is not used in the decoding process of the current color component.

Exemplarily, in the present application, in a case where the value of the third flag information is the first value, the scaling factor generated by the neural network may be selected for the current color component of the current frame of the current sequence, and then the scaling factor determined based on the neural network may be used to complete the decoding process of the current color component; alternatively, in a case where the value of the third flag information is the second value, the scaling factor generated by the neural network may not be selected for the current sequence, and thus the scaling factor determined based on the neural network is not used in the decoding process of the current sequence.

It should be noted that in the embodiments of the present application, the first value may be set to 1 and the second value may be set to 0; alternatively, the first value may be set to "true" and the second value may be set to "false", which are not limited in the present application.

Further, in the embodiments of the present application, a flag nnsf_enable_flag may be used to represent the third flag information.

For example, in the present application, in a case where the value of the nnsf_enable_flag is 1, it may indicate that the scaling factor generated by the neural network is used for the current sequence, and then the scaling factor determined based on the neural network is used to complete the decoding process of the current sequence.

For example, in the present application, in a case where the value of the nnsf_enable_flag is 0, it may indicate that the scaling factor generated by the neural network is not used for the current sequence, and thus the scaling factor determined based on the neural network is not used in the decoding process of the current sequence.

It should be noted that in the embodiments of the present application, the third flag information may be a sequence-level flag, where the third flag information may be pre-set and does not need to be determined by decoding the bitstream.

It can be seen that in the present application, the determination of the first flag information may depend on the determination of the third flag information. Of course, the determination of the first flag information may also depend on that of some other flags, that is, the picture_nnsf_enable_flag[compIdx] may depend on some other flags, which is not specifically limited in the embodiments of the present application.

It should be noted that in the embodiments of the present application, the third flag information may be a sequence-level flag, or even a higher-level flag, such as video usability information (VUI), or supplemental enhancement information (SEI), which is not specifically limited in the embodiments of the present application.

In step 102, in a case where the first flag information indicates that the scaling factor generated by the neural network is used for the current color component of the current frame of the current sequence, second flag information is determined.

In the embodiments of the present application, after determining the first flag information by decoding the bitstream, in a case where the first flag information indicates that the scaling factor generated by the neural network is used for the current color component of the current frame of the current sequence, the second flag information may be further determined.

It can be understood that in the embodiments of the present application, in a case where it is determined by the first flag information that the scaling factor generated by the neural network is used for the current color component of the current frame of the current sequence to generate the scaling factor of the picture block, the second flag information needs to be further determined, to determine which picture block(s) in all picture blocks in the current color component use the scaling factor generated by the neural network according to the second flag information.

That is, in the embodiments of the present application, the second flag information may be used to determine whether the scaling factor generated by the neural network is used for the current block of the current color component of the current frame of the current sequence. In a case where the scaling factor generated by the neural network is used for the current block of the current color component of the current frame of the current sequence, for the current block, a scaling factor corresponding to the current block may be generated, and then the scaling factor corresponding to the current block may be used for the subsequent decoding processing.

In the embodiments of the present application, the second flag information may be understood as a flag bit indicating whether the scaling factor generated by the neural network is used for the current block in the current color component of the current frame of the current sequence, or the second flag information may be understood as a flag bit indicating whether the scaling factor corresponding to the current block is used to determine the reconstructed block of the current block for the current block in the current color component of the current frame of the current sequence. Specifically, the decoder may determine a variable as the second flag information, so that the second flag information may be determined by taking a value of the variable.

It should be noted that in the present application, the value of the second flag information may be a first value or a second value. The different value of the second flag information results in a different manner of determining the reconstructed block of the current block in the current color component of the current frame of the current sequence.

It can be understood that in the embodiments of the present application, based on the value of the second flag information, in decoding the current block of the current color component, the scaling factor generated by the neural network may be selected to be used, or the scaling factor generated by the neural network may not be selected to be used.

Exemplarily, in the present application, in a case where the value of the second flag information is the first value, the scaling factor generated by the neural network may be selected for the current block of the current color component, and then the scaling factor determined based on the neural network is used to complete the decoding process of the current block; and in a case where the value of the second flag information is the second value, the scaling factor generated by the neural network may not be used for the current block of the current color component, and thus the scaling factor determined based on the neural network is not used in the decoding process of the current block.

Exemplarily, in the present application, in a case where the value of the second flag information is the first value, the scaling factor generated by the neural network may be selected for the current block of the current color component, and then the scaling factor determined based on the neural network is used to complete the decoding process of the current block; alternatively, in a case where the value of the second flag information is the second value, the scaling factor generated by the neural network may not be used for the current block of the current color component, and thus the scaling factor determined based on the neural network is not used in the decoding process of the current block.

It should be noted that in the embodiments of the present application, the first value may be set to 1 and the second value may be set to 0; alternatively, the first value may be set to "true" and the second value may be set to "false", which are not limited in the present application.

Further, in the embodiments of the present application, taking the coding tree unit (CTU) as an example, a flag patch_nnsf_enable_flag[compIdx][ctuIdx] may be used to represent the second flag information, where compIdx may be used to represent the color component of the current frame of the current sequence, and ctuIdx may be used to represent the picture block of the current color component of the current frame of the current sequence.

For example, in the present application, in a case where a value of the patch_nnsf_enable_flag[compIdx][ctuIdx] is 1, it may indicate that the scaling factor generated by the neural network is used for the current block of the current color component of the current frame of the current sequence, and then the scaling factor determined based on the neural network is used to complete the decoding process of the current block.

For example, in the present application, in a case where the value of the patch_nnsf_enable_flag[compIdx][ctuIdx] is 0, it may indicate that the scaling factor generated by the neural network is not used for the current block of the current color component of the current frame of the current sequence, and thus the scaling factor determined based on the neural network is not used in the decoding process of the current block.

It should be noted that in the embodiments of the present application, the second flag information may be a block-level flag, where the second flag information may be determined by decoding the bitstream.

Further, in the embodiments of the present application, the second flag information may be a block-level flag, and the block-level flag may include a maximum coding unit (LCU)-level flag, or a coding tree unit (CTU)-level flag, or a coding unit (CU)-level flag, or any one of other block-level flags. In the embodiments of the present application, the coding tree unit (CTU) is mainly used as an example for illustration, but the specific form of the block-level flag is not limited.

In step 103, in a case where the second flag information indicates that the scaling factor generated by the neural network is used for the current block of the current color component of the current frame, the scaling factor generation network is used to determine a scaling factor corresponding to the current block of the current color component.

In the embodiments of the present application, after determining the second flag information, in a case where the second flag information indicates that the scaling factor generated by the neural network is used for the current block of the current color component of the current frame of the current sequence, the scaling factor generation network may be further used to generate the scaling factor corresponding to the current block.

It should be noted that in the embodiments of the present application, the scaling factor generation network may be used to predict the scaling factor of the picture block, that is, the scaling factor generation network may be a network for predicting the scaling factor of the picture block. Therefore, the scaling factor determination process may be performed on the picture block through the scaling factor generation network, and the generated scaling factor corresponds to the picture block, that is, a block-level scaling factor is generated.

It can be understood that in the embodiments of the present application, in a case where the scaling factor generation network is used to determine the scaling factor corresponding to the current block of the current color component, the filtered picture block and the reconstructed picture block corresponding to the current block may be selected to be input into the scaling factor generation network, so that the scaling factor of the current block may be output.

It should be noted that in the embodiments of the present application, the input of the scaling factor generation network may include a filtered picture block generated by a neural network-based loop filter (NNLF), and may further include a reconstructed picture block determined by the sample adaptive offset (SAO). Correspondingly, the output of the scaling factor generation network may be the scaling factor corresponding to the current block.

Further, in the embodiments of the present application, in a case where the scaling factor generation network is used to determine the scaling factor corresponding to the current block of the current color component, the filtered picture block, the reconstructed picture block and feature information corresponding to the current block may also be selected to be input into the scaling factor generation network, so that the scaling factor of the current block may be output. Here, the feature information corresponding to the current block may include one or more pieces of information of block partitioning information, prediction information, and quantization parameter information.

That is to say, in the present application, in determining the scaling factor of the current block based on the scaling factor generation network, in addition to processing the filtered picture block and the reconstructed picture block of the current block, more feature information of the current block may further be input. For example, the block partitioning information of the current block, and/or the prediction information of the current block, and/or the QP information of the current block may be used as one of the inputs of the scaling factor generation network.

Further, in the embodiments of the present application, the network structure of the scaling factor generation network may include at least one of a convolutional layer, a non-linear activation function (PreLU), a concat layer, a max pooling layer, and a full connect layer. That is, the network structure of the scaling factor generation network may include the convolutional layer, and/or the non-linear activation function (PreLU), and/or the concat layer, and/or the max pooling layer, and/or the full connect layer.

Correspondingly, in the embodiments of the present application, based on different network structures, the scaling factor generated by the scaling factor generation network may also be of a different data format. For example, the data form of the scaling factor may be a two-dimensional matrix or a one-dimensional variable, which is not specifically limited in the present application.

Exemplarily, in the embodiments of the present application, the network structure of the scaling factor generation network may include the convolutional layer, the non-linear activation function (PreLU) layer, and the concat layer. Correspondingly, the data form of the scaling factor of the picture block generated by the scaling factor generation network may be the two-dimensional matrix, that is, the scaling factor has the same dimension as the picture block. For example, FIG. 8 is a first schematic diagram of the network structure of the scaling factor generation network. As shown in FIG. 8, the structure of the scaling factor generation network consists of multiple convolutional layers. For the input filtered picture block and the reconstructed picture block, each needs to pass through a convolutional layer and a non-linear activation function (PreLU); and then feature maps are jointed together through the concat layer, and then pass through K convolutional layers and K-1 non-linear activation function (PreLU) layers, to obtain the predicted scaling factor finally, where K is an integer greater than 1.

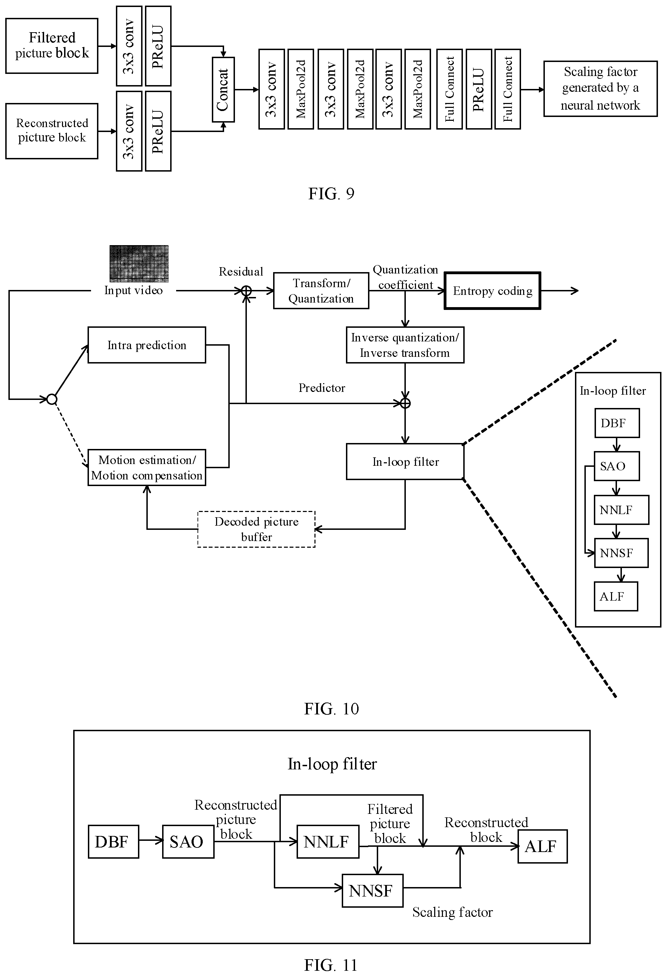

Exemplarily, in the embodiments of the present application, the network structure of the scaling factor generation network may include the convolutional layer, the non-linear activation function (PreLU) layer, the concat layer, the max pooling layer, and the full connect layer. Correspondingly, the data form of the scaling factor of the picture block generated by the scaling factor generation network may be the one-dimensional variable. For example, FIG. 9 is a second schematic diagram of the network structure of the scaling factor generation network. As shown in FIG. 9, the structure of the scaling factor generation network consists of multiple convolutional layers. For the input filtered picture block and the reconstructed picture block, each needs to pass through a convolutional layer and a non-linear activation function (PreLU); and then feature maps are jointed together through the concat layer, then pass through K convolutional layers and K max pooling layers, and finally pass through L full connect layers and L-1 non-linear activation function (PreLU) layers, to obtain the predicted scaling factor, where L is an integer greater than 1.

It should be noted that in the embodiments of the present application, the neural network loop filter generally performs training iterations on its network by calculating a minimum mean square error loss between the network output picture and the original picture. Since the training goal of the filtering network is clear, to train the output of the network to be closer to the original picture (i.e., label), it is more effective to use the minimum mean square error as the loss function.

Further, in the embodiments of the present application, a scaling factor set may also be used to train the scaling factor generation network, so that a data label may be determined from the scaling factor set; then, the loss of the scaling factor generation network may be determined based on the output data and the data label of the scaling factor generation network; and finally, a network parameter of the scaling factor generation network may be updated based on the loss.

For the network structure of the neural network scaling factor as shown in FIG. 9 above, as proposed in the embodiments of the present application, the training goal of the network is to obtain a scaling factor that is closer to the theoretically optimal scaling factor (direct goal), so that the final corrected picture is closer to the original picture (indirect goal). For the original picture (indirect target), it may be obtained directly through a dataset; but for the theoretically optimal scaling factor (direct target), it is actually unknown before training.

That is to say, in the embodiments of the present application, in order to perform better training for the direct target, the embodiments of the present application propose a training method for adaptive label updating. By finding the optimal scaling factor during training, the labels are updated adaptively to achieve better training results.

During the training, for the current input reconstructed picture block $rec(x_i, y_i)$, a certain neural network filter is first loaded to obtain a filtered picture block $cnn(x_i, y_i)$ output from the filter. Then, referring to a correction formula of the scaling factor, the scaling factors SF_i within a specific range [SFmin, SFmax] (i.e., the scaling factor set) (for example, a traditional scaling factor calculation method may be referred to, with the range being set to [16, 320]) are traversed, and the mean square error (MSE) between the output reconstructed block and the original picture is calculated, and the optimal scaling factor SF_best is found as the label SF_label (i.e., data label) of the current training data. The specific training pseudo code is as follows:

```
minloss = maxVALUE
SF_best = -1
for SF_i in range(SFmin, SFmax):
output = rec + SF_i * (cnn-rec)
loss = MSE(output, org)
if(loss < minloss):
    minloss = loss
    SF_best = SF_i
SF_label = SF_best
```

After finding the SF_label, the label of the current training data is updated adaptively.

Finally, by calculating the mean absolute error (MAE) between the output of the scaling factor network [NNSF]_b and the label SF_label, the network loss is calculated, and training iterations and parameter updates are performed.

In step 104, the reconstructed block of the current block is determined according to the scaling factor.

In the embodiments of the present application, after the scaling factor corresponding to the current block of the current color component is determined using the scaling factor generation network, the reconstructed block of the current block may be further determined according to the scaling factor.

It should be noted that in the embodiments of the present application, in determining the reconstructed block of the current block according to the scaling factor, the determination of the reconstructed block of the current block may be implemented optionally according to the scaling factor, the filtered picture block, and the reconstructed picture block.

It can be understood that, in the embodiments of the present application, the scaling factor may be used to perform correction of the residual between the filtered picture block and the reconstructed picture block, thereby completing the reconstruction of the current block to obtain the corresponding reconstructed block.

Further, in the embodiments of the present application, in determining the reconstructed block of the current block based on the scaling factor, the filtered picture block, and the reconstructed picture block, a residual value corresponding to the current block may be first determined based on the filtered picture block and the reconstructed picture block; then the correction of the residual value may be performed based on the scaling factor to obtain a correction result corresponding to the current block; and finally, the reconstructed block of the current block may be determined based on the correction result and the reconstructed picture block.

Exemplarily, in the embodiments of the present application, for the current block $(x_i, y_i)$, in a case where the scaling factor predicted by the scaling factor generation network is a two-dimensional matrix $NNSF_a(x_i, y_i)$, the process of determining the reconstructed block $output(x_i, y_i)$ of the current block using the filtered picture block $cnn(x_i, y_i)$ and the reconstructed picture block $rec(x_i, y_i)$ corresponding to the current block may be expressed as the following formula:

$$output(x_i, y_i) = rec(x_i, y_i) + NNSF_a(x_i, y_i) \times [cnn(x_i, y_i) - rec(x_i, y_i)] \quad (9)$$

Exemplarily, in the embodiments of the present application, for the current block $(x_i, y_i)$ , in a case where the scaling factor predicted by the scaling factor generation network is a one-dimensional variable $NNSF_b$, the process of determining the reconstructed block *output* $(x_i, y_i)$ of the current block using the filtered picture block $cnn(x_i, y_i)$ and the reconstructed picture block $rec(x_i, y_i)$ corresponding to the current block may be expressed as the following formula:

$$output(x_i, y_i) = rec(x_i, y_i) + NNSF_b \times [cnn(x_i, y_i) - rec(x_i, y_i)] \quad (10)$$

It can be understood that in the embodiments of the present application, the above methods all take the unified use of the technology for all components in the video as an example, where all the components refer to R, G, B components of RGB format video, or Y, U, V (Y, Cb, Cr) components of YUV format. Alternatively, the above method may be used for only a certain component, such as only for the Y component of the YUV format. The above method may also be used for each component separately, that is, each component may be independently controlled to use or not use the above method, which is not specifically limited in the present application.

Further, in the embodiments of the present application, FIG. 10 is a schematic diagram of an application of a coding framework proposed in the embodiments of the present application. As shown in FIG. 10, in a loop filtering (in-loop filter) module of a hybrid coding framework, a scaling factor module for scaling factor processing is added, i.e., a neural network-based scaling factor (NNSF) module. The scaling factor module may be used to predict the scaling factor of the picture block using the neural network (scaling factor generation network), and reconstruction of the picture block is completed based on the scaling factor to obtain a corresponding reconstructed block.

It should be noted that in the embodiments of the present application, the scaling factor module (NNSF) may be located after the neural network-based loop filter (NNLF) in the loop filtering module and before the adaptive correction filter (ALF).

It can be understood that in the embodiments of the present application, the use of the scaling factor module (NNSF) does not depend on the switches of the deblocking filter (DBF), the sample adaptive offset (SAO), the neural network-based loop filter (NNLF), and the adaptive correction filter (ALF).

That is to say, whether the learning-based scaling factor module (NNSF) is turned on may be determined by the encoder, and thus in the embodiments of the present application, a frame-level and block (e.g., CTU)-level on/off control can be set for the scaling factor module. At the coding side, by comparing the picture rate distortion cost before and after the scaling factor processing, it may be determined whether to turn on the scaling factor module (NNSF), that is, whether to use the scaling factor generated by the neural network, and the on/off status of the scaling factor module (NNSF) will be coded into the bitstream for the decoder to read. At the decoder side, in a case where it is parsed that the scaling factor module is turned on, that is, in a case where it is determined to use the scaling factor generated by the neural network, the scaling factor of the picture block is used to optimize the picture block; and in a case where it is parsed that the scaling factor module is turned off, that is, in a case where it is determined not to use the scaling factor generated by the neural network, the related processing of the scaling factor is not performed.

Further, in the embodiments of the present application, the scaling factor obtained based on the scaling factor generation network prediction may be a learning-based scaling factor of the picture block, which is used to perform the correction of the residual between the filtered picture block output by the NNLF and the reconstructed picture block output by the SAO, so that the reconstructed block of the current block finally obtained is closer to the original picture, so as to obtain the better coding performance and solve the problems existing in the traditional scaling factor to a certain extent.

It can be understood that in the embodiments of the present application, the network structure of the scaling factor generation network may be a relatively simple convolutional neural network, with the input being the filtered picture block output by the NNLF and the reconstructed picture block output by the SAO, and the output being the scaling factor of the current block (e.g., CTU). That is, the learning-based scaling factor of the current block is predicted by the neural network.

Further, in the embodiments of the present application, the technical solution of using the neural network (the scaling factor generation network) to predict the scaling factor of the picture block is implemented at both the coding and decoding sides and may act in the loop filtering module.

Exemplarily, in the embodiments of the present application, the decoder obtains and parses the bitstream, and when parsing the loop filtering module, the decoder processes it according to the specified filter order. When coming to the scaling factor module, it is first determined whether the neural network scaling factor module may be used in the current sequence according to the sequence-level flag nnsf_enable_flag (the third flag information), that is, it is determined whether to use the scaling factor generated by the neural network for at least one picture frame of the current sequence according to the third flag information. In a case where the nnsf_enable_flag is "1", it is determined that the current sequence is processed with the scaling factor module, that is, it is determined that the third flag information indicates that the scaling factor generated by the neural network is used for the at least one picture frame in the current sequence, and then the first flag information may be further determined; and in a case where the nnsf_enable_flag is "0", it is determined that the scaling factor module is not used for the current sequence, that is, it is determined that the third flag information indicates that the scaling factor generated by the neural network is not used for all picture frames in the current sequence, and then ALF processing may continue.

Accordingly, in the embodiments of the present application, after determining that the third flag information indicates that the scaling factor generated by the neural network is used for the at least one picture frame of the current sequence, and determining the first flag information (picture-level flag picture_nnsf_enable_flag[compIdx]), for the current frame of the current sequence, in a case where the picture_nnsf_enable_flag[compIdx] is "1", it is determined that the current color component in the current frame of the current sequence is processed with the scaling factor module, that is, it is determined that the first flag information indicates that the scaling factor generated by the neural network is used for the current color component of the current frame of the current sequence, and then the second flag information may be further determined; and in a case where the picture_nnsf_enable_flag[compIdx] is "0", it is determined that the scaling factor module is not used for the current color component in the current frame of the current sequence, that is, it is determined that the first flag information indicates that the scaling factor generated by the neural network is not used for the current color component in the current frame of the current sequence, and then the ALF processing may continue.

Accordingly, in the embodiments of the present application, after determining that the first flag information indicates that the scaling factor generated by the neural network is used for the current color component of the current frame of the current sequence, and determining the second flag information (the block-level flag patch_nnsf_enable_flag [compIdx][ctuIdx]), for the current color component of the current frame of the current sequence, in a case where the patch_nnsf_enable_flag[compIdx][ctuIdx] is "1", it is determined that the current block in the current color component is processed with the scaling factor module, that is, it is determined that the second flag information indicates that the scaling factor generated by the neural network is used for the current block of the current color component of the current frame of the current sequence; and in a case where the patch_nnsf_enable_flag[compIdx][ctuIdx] is "0", it is determined that the scaling factor module is not used for the current block in the current color component of the current frame of the current sequence, that is, it is determined that the second flag information indicates that the scaling factor generated by the neural network is not used for the current block in the current color component, and then the ALF processing may continue.

It can be understood that in the embodiments of the present application, after all picture blocks in the current color component of the current frame of the current sequence are traversed, a next color component of the current frame of the current sequence may continue to be loaded, and then all color components of the current frame of the current sequence may continue to be traversed according to the above method, and after a decision of the neural network scaling factor module of the current frame is completed, a next frame of the current sequence is loaded for processing.

Further, in the embodiments of the present application, FIG. 11 is a schematic diagram of an overall framework of the loop filtering module. As shown in FIG. 11, the loop filtering module mainly includes the deblocking filter (DBF), the sample adaptive offset (SAO), the neural network-based loop filter (NNLF), the neural network-based scaling factor (NNSF) module, the adaptive loop filter (ALF) and other tools.

The network structure of the NNSF module (the scaling factor generation network) here may be composed of a relatively simple convolutional neural network, where the NNSF module may output the scaling factor of the picture block in the form of a two-dimensional matrix as shown in FIG. 8 above, or may output the scaling factor of the picture block in the form of a one-dimensional variable as shown in FIG. 9 above.

Exemplarily, in the embodiments of the present application, for one picture block, a reconstructed picture block corresponding to the picture block output by the SAO may be input into both the NNLF and NNSF modules, and then the NNLF outputs a filtered picture block corresponding to the picture block. The filtered picture block is input into the NNSF module, and then a scaling factor corresponding to the picture block and generated by the neural network may be output, so that the scaling factor may be used to perform the correction of a residual between the filtered picture block and the reconstructed picture block, and finally a reconstructed block corresponding to the picture block is output, and the reconstructed block continues to be input into the ALF to perform subsequent filtering processing.

Further, in the embodiments of the present application, a sequence header definition syntax is shown in Table 1:

Table 1

| sequence_header() { | **Descriptor** |
|---|---|
| ... ... | |
| **nnsf_enable_flag** | u(1) |
| | |
| ... ... | |
| } | |

In syntax, an enable flag of the scaling factor generated by the neural network is nnsf_enable_flag, that is, the third flag information used to indicate whether to use the scaling factor generated by the neural network for the current sequence is the nnsf_enable_flag.

For example, in a case where a value of nnsf_enable_flag is 1, it may be determined that the current sequence is processed with the scaling factor module, that is, it may be determined that the scaling factor generated by the neural network may be used for the current sequence; and in a case where the value of nnsf_enable_flag is 0, it may be determined that the scaling factor generated by the neural network is not used for the current sequence.

Further, in the embodiments of the present application, a picture header definition syntax is shown in Table 2:

Table 2

| picture_header() { | **Descriptor** |
|---|---|
| ... ... | ... ... |
| **if(nnsf_enable_flag)** { | |
| **for (compIdx=0; compIdx<3; compIdx++) {** | |
| **picture_nnsf_enable_flag[compIdx]** | u(1) |
| } | |
| } | |
| | |
| ... ... | ... ... |

In syntax, in a case where a value of an enable flag of the scaling factor generated by the neural network, i.e., the nnsf_enable_flag, is 1, that is, in a case where the third flag information indicates that the scaling factor generated by the neural network is used for the current sequence, it may be determined that an enable flag of the picture-level neural network scaling factor is picture_nnsf_enable_flag[compIdx], that is, the first flag information used to indicate whether the scaling factor generated by the neural network is used for the current color component of the current frame of the current sequence is the picture_nnsf_enable_flag[compIdx].

For example, in a case where the value of the picture_nnsf_enable_flag[compIdx] is 1, it may be determined that the current color component of the current frame of the current sequence is processed with the scaling factor module, that is, it may be determined that the scaling factor generated by the neural network may be used for the current color component of the current frame of the current sequence; and in a case where the value of the picture_nnsf_enable_flag [compIdx] is 0, it may be determined that the current color component of the current frame of the current sequence does not use the scaling factor generated by the neural network.

Further, in the embodiments of the present application, a slice definition syntax is shown in Table 3:

Table 3

| patch( ) { | **Descriptor** |
|---|---|
| ... ... | ... ... |
| **if (nnsf_enable_flag)** { | |
| **for (compIdx=0; compIdx<3; compIdx++) {** | u(1) |
| **if (picture_nnsf_enable_flag[compIdx]){** | |
| **patch_nnsf_enable_flag[compIdx][ctuIdx]** | ae(v) |
| } | |
| } | |
| } | |
| | |
| ... ... | ... ... |

In syntax, in a case where a value of an enable flag of the scaling factor generated by the neural network, i.e., the nnsf_enable_flag, is 1, that is, in a case where the third flag information indicates that the scaling factor generated by the neural network is used for the current sequence, and at the same time, it is determined that the value of the picture-level neural network scaling factor, i.e., the enable flag picture_nnsf_enable_flag[compIdx], is 1, that is, in a case where the first flag information indicates that the scaling factor generated by the neural network is used for the current color component of the current frame of the current sequence, it may be determined that the block-level neural network scaling factor enable flag is patch_nnsf_enable_flag[compIdx][ctuIdx], that is, the second flag information used to indicate whether the scaling factor generated by the neural network is used for the current block of the current color component of the current frame of the current sequence is the patch_nnsf_enable_flag[compIdx][ctuIdx].

For example, in a case where the value of the patch_nnsf_enable_flag[compIdx][ctuIdx] is 1, it may be determined that the current block of the current color component of the current frame of the current sequence is processed with the scaling factor module, that is, it may be determined that the scaling factor generated by the neural network may be used for the current block of the current color component of the current frame of the current sequence; and in a case where the value of the patch_nnsf_enable_flag[compIdx][ctuIdx] is 0, it may be determined that the scaling factor generated by the neural network is not used for the current block of the current color component of the current frame of the current sequence.

In summary, in the embodiments of the present application, through the decoding method proposed in the above step 101 to step 106, in one aspect, the scaling factor of the picture block may be predicted by the scaling factor generation network, that is, the scaling factor corresponding to the picture block is generated, so the calculation method is flexible, and the picture block may be better optimized and corrected, thereby improving the coding performance; in another aspect, the prediction of the scaling factor may be performed only based on the picture block that enables the scaling factor generated using the neural network, without traversing all picture blocks, thereby solving the delay problem; and in yet another aspect, the scaling factor generation network is used at both the coding and decoding sides to predict the scaling factor of the picture block, and the scaling factor does not need to be coded and transmitted, which saves the number of bits required for coding the scaling factor and improves the coding efficiency.

Further, in the embodiments of the present application, preliminary training and testing of the coding and decoding methods proposed in the present application are implemented based on the VTM11.0-nnvc reference platform.

First, a conventional NNLF is implemented, consisting of a multi-layer convolutional neural network based on residual learning. Then, an NNSF is further trained (a network structure of the scaling factor generation network shown in FIG. 9 above may be used, and trained for the Y component of non-I frames), and the performance testing is performed. Under the general test condition Random Access configuration, the specified general sequence is tested, and the compared anchor is VTM11.0-nnvc. The test results of some sequences are shown in Table 4 and Table 5, where Table 4 shows the RA performance of the NNLF compared with the anchor, and Table 5 shows the RA performance of the NNSF compared with the anchor.

Table 4

| | Random Access | | |
|---|---|---|---|
| | Y | U | V |
| Class B | **-3.12%** | -15.45% | -14.91% |
| Class C | **-3.36%** | -14.35% | -14.60% |
| Class D | **-5.62%** | -16.70% | -16.72% |

Table 5

| | Random Access | | |
|---|---|---|---|
| | Y | U | V |
| Class B | **-3.33%** | -15.43% | -14.90% |
| Class C | **-3.52%** | -14.32% | -14.56% |
| Class D | **-5.73%** | -16.73% | -16.68% |

By comparing the performance data of the Y component in Table 4 and Table 5, it can be seen that by introducing the learning-based scaling factor (that is, the scaling factor of the picture block predicted by the scaling factor generation network), the coding performance can be improved to a certain extent based on the neural network loop filter, and the performance may be further improved through subsequent optimization training.

It can be understood that in the embodiments of the present application, the above methods all take the unified use of the technology for all components in the video as an example, where all the components refer to R, G, B components of RGB format video, or Y, U, V (Y, Cb, Cr) components of YUV format. Alternatively, the above method may be used for only a certain component, such as only for the Y component of the YUV format. The above method may also be used for each component separately, that is, each component may be independently controlled to use or not use the above method, which is not specifically limited in the present application.

The embodiments of the present application provide a decoding method, in which the decoder decodes a bitstream and determines first flag information; the decoder determines, in a case where the first flag information indicates that a scaling factor generated by a neural network is used for a current color component of a current frame of a current sequence, second flag information; the decoder determines, in a case where the second flag information indicates that the scaling factor generated by the neural network is used for a current block of the current color component, a scaling factor corresponding to the current block using a scaling factor generation network, where the scaling factor generation network is used to predict a scaling factor of a picture block; and the decoder determines a reconstructed block of the current block according to the scaling factor. That is to say, in the embodiments of the present application, the decoder may use the scaling factor generation network at the decoding side to predict and obtain a learning-based scaling factor of the picture block, for correcting the residual corresponding to the picture block to obtain a reconstructed block that is closer to the original picture, which enhance the flexibility and applicability of the scaling factor, and are capable of improving the coding performance while improving the coding efficiency.

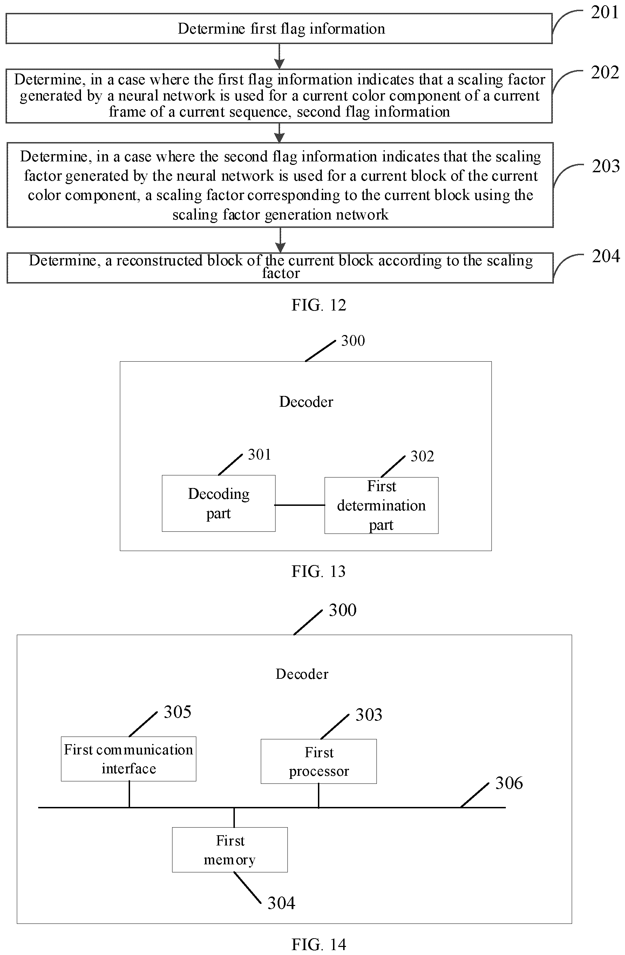

Based on the above embodiments, another embodiment of the present application proposes a coding method, which is applied to an encoder. FIG. 12 is a schematic flowchart of an implementation of the coding method. As shown in FIG. 12, the coding method performed by the encoder may include the following steps:

step 201, determining first flag information.

In the embodiments of the present application, the encoder may first determine the first flag information.

It should be noted that in the implementation of the present application, the first flag information may be used to determine whether the scaling factor generated by the neural network is used for the current color component of the current frame of the current sequence. In a case where the scaling factor generated by the neural network is used for the current color component of the current frame of the current sequence, for at least one picture block in the current color component of the current frame of the current sequence, a scaling factor corresponding to the picture block may be generated, and then the scaling factor corresponding to the picture block may be used for subsequent coding processing.

In the embodiments of the present application, the first flag information may be understood as a flag bit indicating whether the scaling factor generated by the neural network is used for at least one picture block in the current color component of the current frame of the current sequence, or the first flag information may be understood as a flag bit indicating whether the scaling factor corresponding to the picture block is used to determine the reconstructed block of the picture block for at least one picture block in the current color component of the current frame of the current sequence. Specifically, the encoder may determine a variable serving as the first flag information, so that the first flag information may be determined by the value of the variable.

It should be noted that in the present application, the value of the first flag information may be a first value or a second value. The different value of the first flag information results in a different manner of determining the reconstructed block of at least one picture block in the current color component of the current frame of the current sequence.

It can be understood that in the embodiments of the present application, based on the value of the first flag information, in coding the current color component, the scaling factor generated by the neural network may be selected to be used, or the scaling factor generated by the neural network may not be selected to be used.

Exemplarily, in the present application, in a case where the value of the first flag information is the first value, the scaling factor generated by the neural network may be selected for the current color component of the current frame of the current sequence, and then the scaling factor determined based on the neural network may be used to complete the coding process of the current color component; and in a case where the value of the first flag information is the second value, the scaling factor generated by the neural network may not be selected for the current color component of the current frame of the current sequence, and thus the scaling factor determined based on the neural network is not be used in the decoding process of the current color component.

Exemplarily, in the present application, in a case where the value of the first flag information is the first value, the scaling factor generated by the neural network may be selected for the current color component of the current frame of the current sequence, and then the scaling factor determined based on the neural network may be used to complete the decoding process of the current color component; alternatively, in a case where the value of the first flag information is the second value, the scaling factor generated by the neural network may not be selected to use for the current color component of the current frame of the current sequence, and thus the scaling factor determined based on the neural network is not be used in the coding process of the current color component.

It should be noted that in the embodiments of the present application, the first value may be set to 1 and the second value may be set to 0; alternatively, the first value may also be set to "true" and the second value may be set to "false", which are not limited in the present application.

Further, in the embodiments of the present application, a flag picture_nnsf_enable_flag[compIdx] may be used to represent the first flag information, where compIdx may be used to represent the color component of the current frame of the current sequence.

For example, in the present application, in a case where the value of the picture_nnsf_enable_flag[compIdx] is 1, it may indicate that the scaling factor generated by the neural network is used for the current color component of the current frame of the current sequence, and then the scaling factor determined based on the neural network is used to complete the coding process of the current color component.

For example, in the present application, in a case where the value of the picture_nnsf_enable_flag[compIdx] is 0, it may indicate that the scaling factor generated by the neural network is not used for the current color component of the current frame of the current sequence, and thus the scaling factor determined based on the neural network is not used in the coding process of the current color component.

It should be noted that in the embodiments of the present application, the first flag information may be a picture-level flag, where the first flag information may be written into the bitstream and transmitted to a decoding side.

Further, in the embodiments of the present application, the method for coding by the encoder may further include the following steps.

In step 205, third flag information is determined.

In step 206, in a case where the third flag information indicates that the scaling factor generated by the neural network is used for the current sequence, the determination process of the first flag information is performed.

In the embodiments of the present application, the third flag information may be determined first, and then it may be determined whether to further determine the first flag information based on the third flag information. In a case where the third flag information indicates that the scaling factor generated by the neural network is used for the current sequence, the determination of the first flag information may be selected.

It should be noted that in the implementation of the present application, the third flag information may be used to determine whether to use the scaling factor generated by the neural network for the current sequence. That is, in a case where the scaling factor generated by the neural network is used for the current sequence, for at least one picture frame in the current sequence, a scaling factor corresponding to the picture block may be generated, and then the scaling factor corresponding to the picture block may be used for the subsequent coding processing.

In the embodiments of the present application, the third flag information may be understood as a flag bit indicating whether the scaling factor generated by the neural network is used for at least one picture frame in the current sequence, or the third flag information may be understood as a flag bit indicating whether the scaling factor corresponding to the picture block is used to determine the reconstructed block of the picture block for at least one picture frame in the current sequence. Specifically, a variable serving as the third flag information may be determined, so that the third flag information may be determined by taking the value of the variable.

It should be noted that in the present application, the value of the third flag information may be a first value or a second value. The different value of the third flag information results in a different manner of determining the reconstructed block of the picture block of at least one picture frame in the current sequence.

It can be understood that in the embodiments of the present application, based on the value of the third flag information, in coding the at least one picture frame in the current sequence, the scaling factor generated by the neural network may be selected to be used, or the scaling factor generated by the neural network may not be selected to be used.

Exemplarily, in the present application, in a case where the value of the third flag information is the first value, the scaling factor generated by the neural network may be selected for the current sequence, and then the scaling factor determined based on the neural network may be used to complete the coding process of the current sequence; and in a case where the value of the third flag information is the second value, the scaling factor generated by the neural network may not be selected for the current sequence, and thus the scaling factor determined based on the neural network is not used in the coding process of the current sequence.

Exemplarily, in the present application, in a case where the value of the third flag information is the first value, the scaling factor generated by the neural network may be selected for the current sequence, and then the scaling factor determined based on the neural network may be used to complete the coding process of the current color component; alternatively, in a case where the value of the third flag information is the second value, the scaling factor generated by the neural network may not be selected for the current sequence, and thus the scaling factor determined based on the neural network is not used in the coding process of the current sequence.

It should be noted that in the embodiments of the present application, the first value may be set to 1 and the second value may be set to 0; alternatively, the first value may be set to "true" and the second value may be set to "false", which are not limited in the present application.

Further, in the embodiments of the present application, a flag nnsf_enable_flag may be used to represent the third flag information.

For example, in the present application, in a case where the value of the nnsf_enable_flag is 1, it may indicate that the scaling factor generated by the neural network is used for the current sequence, and then the scaling factor determined based on the neural network is used to complete the coding process of the current sequence.

For example, in the present application, in a case where the value of nnsf_enable_flag is 0, it may indicate that the scaling factor generated by the neural network is not used for the current sequence, and thus the scaling factor determined based on the neural network is not used in the coding process of the current sequence.

It should be noted that in the embodiments of the present application, the third flag information may be a sequence-level flag, where the third flag information may be pre-set and does not need to be written into the bitstream.

It can be seen that in the present application, the determination of the first flag information may depend on the determination of the third flag information. Of course, the determination of the first flag information may also depend on that of some other flags, that is, the picture_nnsf_enable_flag[compIdx] may depend on some other flags, which is not specifically limited in the embodiments of the present application.

It should be noted that in the embodiments of the present application, the third flag information may be a sequence-level flag, or even a higher-level flag, such as video usability information (VUI), or supplemental enhancement information (SEI), which is not specifically limited in the embodiments of the present application.

In step 202, in a case where the first flag information indicates that the scaling factor generated by the neural network is used for the current color component of the current frame of the current sequence, second flag information is determined.

In the embodiments of the present application, after determining the first flag information, in a case where the first flag information indicates that the scaling factor generated by the neural network is used for the current color component of the current frame of the current sequence, the second flag information may be further determined.

It can be understood that in the embodiments of the present application, in a case where it is determined by the first flag information that the scaling factor generated by the neural network is used for the current color component of the current frame of the current sequence to generate the scaling factor of the picture block, the second flag information needs to be further determined, to determine which picture block(s) in all picture blocks in the current color component use the scaling factor generated by the neural network according to the second flag information.

That is, in the embodiments of the present application, the second flag information may be used to determine whether the scaling factor generated by the neural network is used for the current block of the current color component of the current frame of the current sequence. In a case where the scaling factor generated by the neural network is used for the current block of the current color component of the current frame of the current sequence, for the current block, a scaling factor corresponding to the current block may be generated, and then the scaling factor corresponding to the current block may be used for the subsequent coding processing.

In the embodiments of the present application, the second flag information may be understood as a flag bit indicating whether the scaling factor generated by the neural network is used for the current block in the current color component of the current frame of the current sequence, or the second flag information may be understood as a flag bit indicating whether the scaling factor corresponding to the current block is used to determine the reconstructed block of the current block for the current block in the current color component of the current frame of the current sequence. Specifically, the encoder may determine a variable as the second flag information, so that the second flag information may be determined by taking a value of the variable.

It should be noted that in the present application, the value of the second flag information may be a first value or a second value. The different value of the second flag information results in a different manner of determining the reconstructed block of the current block in the current color component of the current frame of the current sequence.

It can be understood that in the embodiments of the present application, based on the value of the second flag information, in coding the current block of the current color component, the scaling factor generated by the neural network may be selected to be used, or the scaling factor generated by the neural network may not be selected to be used.

Exemplarily, in the present application, in a case where the value of the second flag information is the first value, the scaling factor generated by the neural network may be selected for the current block of the current color component, and then the scaling factor determined based on the neural network is used to complete the coding process of the current block; and in a case where the value of the second flag information is the second value, then the scaling factor generated by the neural network may not be used for the current block of the current color component, and thus the scaling factor determined based on the neural network is not used in the coding process of the current block.

Exemplarily, in the present application, in a case where the value of the second flag information is the first value, the scaling factor generated by the neural network may be selected for the current block of the current color component, and then the scaling factor determined based on the neural network is used to complete the coding process of the current block; alternatively, in a case where the value of the second flag information is the second value, the scaling factor generated by the neural network may not be used for the current block of the current color component, and thus the scaling factor determined based on the neural network is not used in the coding process of the current block.

It should be noted that in the embodiments of the present application, the first value may be set to 1 and the second value may be set to 0; alternatively, the first value may be set to "true" and the second value may be set to "false", which are not limited in the present application.

Further, in the embodiments of the present application, taking the coding tree unit (CTU) as an example, a flag patch_nnsf_enable_flag[compIdx][ctuIdx] may be used to represent the second flag information, where compIdx may be used to represent the color component of the current frame of the current sequence, and ctuIdx may be used to represent the picture block of the current color component of the current frame of the current sequence.

For example, in the present application, in a case where a value of the patch_nnsf_enable_flag[compIdx][ctuIdx] is 1, it may indicate that the scaling factor generated by the neural network is used for the current block of the current color component of the current frame of the current sequence, and then the scaling factor determined based on the neural network is used to complete the coding process of the current block.

For example, in the present application, in a case where the value of the patch_nnsf_enable_flag[compIdx][ctuIdx] is 0, it may indicate that the scaling factor generated by the neural network is not used for the current block of the current color component of the current frame of the current sequence, and thus the scaling factor determined based on the neural network is not used in the coding process of the current block.

It should be noted that in the embodiments of the present application, the second flag information may be a block-level flag, where the second flag information may be written into the bitstream and transmitted to the decoding side.

Further, in the embodiments of the present application, the second flag information may be a block-level flag, and the block-level flag may include a maximum coding unit (LCU)-level flag, or a coding tree unit (CTU)-level flag, or a coding unit (CU)-level flag, or any one of other block-level flags. In the embodiments of the present application, the coding tree unit (CTU) is mainly used as an example for illustration, but the specific form of the block-level flag is not limited.

It should be noted that in the embodiments of the present application, after determining the third flag information, in a case where the third flag information indicates that the scaling factor generated by the neural network is used for the current sequence, the scaling factor generated by the neural network may be used for each picture block of the current color component of the current frame of the current sequence, thereby obtaining a cost parameter of each picture block.

It can be understood that in the embodiments of the present application, based on the third flag information, in a case where it is determined that the scaling factor generated by the neural network is used for the current sequence, all picture blocks of the current color component of the current frame of the current sequence may be traversed in sequence, and each picture block may be processed using the scaling factor generated by the neural network to obtain a corresponding processed picture block, and then the cost parameter corresponding to each picture block may be calculated based on the picture block before processing and the picture block after processing, where the cost parameter may include but are not limited to rate-distortion cost.

Exemplarily, in the present application, in a case where the cost parameter is less than 0, that is, a cost of the picture block after processing is less than a cost of the picture block before processing, it is possible to consider that the scaling factor generated by the neural network is capable of being used for the picture block; correspondingly, in a case where the cost parameter is not less than 0, that is, the cost of the picture block after processing is not less than the cost of the picture block before processing, it is possible to consider that there is no need to use the scaling factor generated by the neural network for the picture block.

Further, in the embodiments of the present application, in a case where a cost parameter of a picture block indicates that the scaling factor generated by the neural network is used for the picture block, a value of second flag information of the picture block is set to the first value; and in a case where a cost parameter of a picture block indicates that the scaling factor generated by the neural network is not used for the picture block, a value of second flag information of the picture block is set to the second value.

That is to say, in the embodiments of the present application, in a case where processing by using the scaling factor generated by the neural network may reduce the cost of the picture block, the second flag information corresponding to the picture block may be set to the first value, that is, the second flag information is set to indicate that the scaling factor generated by the neural network is used for the picture block; and in a case where processing by using the scaling factor generated by the neural network does not reduce the cost of the picture block, the second flag information corresponding to the picture block may be set to the second value, that is, the second flag information is set to indicate that the scaling factor generated by the neural network is not used for the picture block.

Further, in the embodiments of the present application, in a case where pieces of second flag information of all picture blocks of the current color component of the current frame of the current sequence are not all the second value, the value of the first flag information of the current color component is set to the first value; and in a case where the pieces of second flag information of all picture blocks of the current color component of the current frame of the current sequence are all the second value, the value of the first flag information of the current color component is set to the second value.

That is to say, in the embodiments of the present application, for the current frame of the current sequence, in a case where all pieces of second flag information corresponding to all picture blocks of the current color component are not all the second value, it is necessary to use the scaling factor generated by the neural network for the current color component of the current frame of the current sequence, and therefore the value of the first flag information of the current color component may be set to the first value, that is, the first flag information is set to indicate that the scaling factor generated by the neural network is used for the current color component; and in a case where all pieces of second flag information corresponding to all picture blocks of the current color component are all the second value, it is not necessary to use the scaling factor generated by the neural network for the current color component of the current frame of the current sequence, and therefore the value of the first flag information of the current color component may be set to the second value, that is, the first flag information is set to indicate that the scaling factor generated by the neural network is not used for the current color component.

In step 203, in a case where the second flag information indicates that the scaling factor generated by the neural network is used for the current block of the current color component of the current frame, the scaling factor generation network is used to determine a scaling factor corresponding to the current block of the current color component.

In the embodiments of the present application, after determining the second flag information, in a case where the second flag information indicates that the scaling factor generated by the neural network is used for the current block of the current color component of the current frame of the current sequence, the scaling factor generation network may be further used to generate the scaling factor corresponding to the current block.

It should be noted that in the embodiments of the present application, the scaling factor generation network may be used to predict the scaling factor of the picture block, that is, the scaling factor generation network may be a network for predicting the scaling factor of the picture block. Therefore, the scaling factor determination process may be performed on the picture block through the scaling factor generation network, and the generated scaling factor corresponds to the picture block, that is, a block-level scaling factor is generated.

It can be understood that in the embodiments of the present application, in a case where the scaling factor generation network is used to determine the scaling factor corresponding to the current block of the current color component, the filtered picture block and the reconstructed picture block corresponding to the current block may be selected to be input into the scaling factor generation network, so that the scaling factor of the current block may be output.

It should be noted that in the embodiments of the present application, the input of the scaling factor generation network may include a filtered picture block generated by a neural network-based loop filter (NNLF), and may further include a reconstructed picture block determined by the sample adaptive offset (SAO). Correspondingly, the output of the scaling factor generation network may be the scaling factor corresponding to the current block.

Further, in the embodiments of the present application, in a case where the scaling factor generation network is used to determine the scaling factor corresponding to the current block of the current color component, the filtered picture block, the reconstructed picture block and feature information corresponding to the current block may also be selected to be input into the scaling factor generation network, so that the scaling factor of the current block may be output. Here, the feature information corresponding to the current block may include one or more pieces of information of block partitioning information, prediction information, and quantization parameter information.

That is to say, in the present application, in determining the scaling factor of the current block based on the scaling factor generation network, in addition to processing the filtered picture block and the reconstructed picture block of the current block, more feature information of the current block may further be input. For example, the block partitioning information of the current block, and/or the prediction information of the current block, and/or the QP information of the current block may be used as one of the inputs of the scaling factor generation network.

Further, in the embodiments of the present application, the network structure of the scaling factor generation network may include at least one of a convolutional layer, a non-linear activation function (PreLU), a concat layer, a max pooling layer, and a full connect layer. That is, the network structure of the scaling factor generation network may include the convolutional layer, and/or the non-linear activation function (PreLU), and/or the concat layer, and/or the max pooling layer, and/or the full connect layer.

Correspondingly, in the embodiments of the present application, based on different network structures, the scaling factor generated by the scaling factor generation network may also be of a different data format. For example, the data form of the scaling factor may be a two-dimensional matrix or a one-dimensional variable, which is not specifically limited in the present application.

Exemplarily, in the embodiments of the present application, the network structure of the scaling factor generation network may include the convolutional layer, the non-linear activation function (PreLU) layer, and the concat layer. Correspondingly, the data form of the scaling factor of the picture block generated by the scaling factor generation network may be the two-dimensional matrix, that is, the scaling factor has the same dimension as the picture block. For example, as shown in FIG. 8, the structure of the scaling factor generation network consists of multiple convolutional layers. For the input filtered picture block and the reconstructed picture block, each needs to pass through a convolutional layer and a non-linear activation function (PreLU); and then feature maps are jointed together through the concat layer, and then pass through K convolutional layers and K-1 non-linear activation function (PreLU) layers, to obtain the predicted scaling factor finally, where K is an integer greater than 1.

Exemplarily, in the embodiments of the present application, the network structure of the scaling factor generation network may include the convolutional layer, the non-linear activation function (PreLU) layer, the concat layer, the max pooling layer, and the full connect layer. Correspondingly, the data form of the scaling factor of the picture block generated by the scaling factor generation network may be the one-dimensional variable. For example, as shown in FIG. 9, the structure of the scaling factor generation network consists of multiple convolutional layers. For the input filtered picture block and the reconstructed picture block, each needs to pass through a convolutional layer and a non-linear activation function (PreLU); and then feature maps are jointed together through the concat layer, then pass through K convolutional layers and K max pooling layers, and finally pass through L full connect layers and L-1 non-linear activation function (PreLU) layers, to obtain the predicted scaling factor, where L is an integer greater than 1.

It should be noted that in the embodiments of the present application, the neural network loop filter generally performs training iterations on its network by calculating a minimum mean square error loss between the network output picture and the original picture. Since the training goal of the filtering network is clear, to train the output of the network to be closer to the original picture (i.e., label), it is more effective to use the minimum mean square error as the loss function.

Further, in the embodiments of the present application, a scaling factor set may also be used to train the scaling factor generation network, so that a data label may be determined from the scaling factor set; then, the loss of the scaling factor generation network may be determined based on the output data and the data label of the scaling factor generation network; and finally, a network parameter of the scaling factor generation network may be updated based on the loss.

For the network structure of the neural network scaling factor as shown in FIG. 9 above, as proposed in the embodiments of the present application, the training goal of the network is to obtain a scaling factor that is closer to the theoretically optimal scaling factor (direct goal), so that the final corrected picture is closer to the original picture (indirect goal). For the original picture (indirect target), it may be obtained directly through a dataset; but for the theoretically optimal scaling factor (direct target), it is actually unknown before training.

That is to say, in the embodiments of the present application, in order to perform better training for the direct target, the embodiments of the present application propose a training method for adaptive label updating. By finding the optimal scaling factor during training, the labels are updated adaptively to achieve better training results.

During the training, for the current input reconstructed picture block $rec(x_i, y_i)$, a certain neural network filter is first loaded to obtain a filtered picture block $cnn(x_i, y_i)$ output from the filter. Then, referring to a correction formula of the scaling factor, the scaling factors SF_i within a specific range [SFmin, SFmax] (i.e., the scaling factor set) (for example, a traditional scaling factor calculation method may be referred to, with the range being set to [16, 320]) are traversed, and the mean square error (MSE) between the output reconstructed block and the original picture is calculated, and the optimal scaling factor SF_best is found as the label SF_label (i.e., data label) of the current training data. The specific training pseudo code is as follows:

```
minloss = maxVALUE
SF_best = -1
for SF_i in range(SFmin, SFmax):
output = rec + SF_i * (cnn-rec)
loss = MSE(output, org)
if(loss < minloss):
    minloss = loss
    SF_best = SF_i
SF_label = SF_best
```

After finding the SF_label, the label of the current training data is updated adaptively.

Finally, by calculating the mean absolute error (MAE) between the output of the scaling factor network [NNSF]_b and the label SF_label, the network loss is calculated, and training iterations and parameter updates are performed.

In step 204, the reconstructed block of the current block is determined according to the scaling factor.

In the embodiments of the present application, after the scaling factor corresponding to the current block of the current color component is determined using the scaling factor generation network, the reconstructed block of the current block may be further determined according to the scaling factor.

It should be noted that in the embodiments of the present application, in determining the reconstructed block of the current block according to the scaling factor, the determination of the reconstructed block of the current block may be implemented optionally according to the scaling factor, the filtered picture block, and the reconstructed picture block.

It can be understood that, in the embodiments of the present application, the scaling factor may be used to perform correction of the residual between the filtered picture block and the reconstructed picture block, thereby completing the reconstruction of the current block to obtain the corresponding reconstructed block.

Further, in the embodiments of the present application, in determining the reconstructed block of the current block based on the scaling factor, the filtered picture block, and the reconstructed picture block, a residual value corresponding to the current block may be first determined based on the filtered picture block and the reconstructed picture block; then the correction of the residual value may be performed based on the scaling factor to obtain a correction result corresponding to the current block; and finally, the reconstructed block of the current block may be determined based on the correction result and the reconstructed picture block.

Exemplarily, in the embodiments of the present application, for the current block $(x_i, y_i)$ , in a case where the scaling factor predicted by the scaling factor generation network is a two-dimensional matrix $NNSF_a(x_i, y_i)$ , the process of determining the reconstructed block $output(x_i, y_i)$ of the current block using the filtered picture block $cnn(x_i, y_i)$ and the reconstructed picture block $rec\ (x_i, y_i)$ corresponding to the current block may be expressed as in formula (9).

Exemplarily, in the embodiments of the present application, for the current block $(x_i, y_i)$ , in a case where the scaling factor predicted by the scaling factor generation network is a one-dimensional variable $NNSF_b$, the process of determining the reconstructed block $output\ (x_i, y_i)$ of the current block using the filtered picture block $cnn(x_i, y_i)$ and the reconstructed picture block $rec(x_i, y_i)$ corresponding to the current block may be expressed as in formula (10).

It can be understood that in the embodiments of the present application, the above methods all take the unified use of the technology for all components in the video as an example, where all the components refer to R, G, B components of RGB format video, or Y, U, V (Y, Cb, Cr) components of YUV format. Alternatively, the above method may be used for only a certain component, such as only for the Y component of the YUV format. The above method may also be used for each component separately, that is, each component may be independently controlled to use or not use the above method, which is not specifically limited in the present application.

Further, in the embodiments of the present application, as shown in FIG. 10, in a loop filtering (in-loop filter) module of a hybrid coding framework, a scaling factor module for scaling factor processing is added, i.e., a neural network-based scaling factor (NNSF) module. The scaling factor module may be used to predict the scaling factor of the picture block using the neural network (scaling factor generation network), and reconstruction of the picture block is completed based on the scaling factor to obtain a corresponding reconstructed block.

It should be noted that in the embodiments of the present application, the scaling factor module (NNSF) may be located after the neural network-based loop filter (NNLF) in the loop filtering module and before the adaptive correction filter (ALF).

It can be understood that in the embodiments of the present application, the use of the scaling factor module (NNSF) does not depend on the switches of the deblocking filter (DBF), the sample adaptive offset (SAO), the neural network-based loop filter (NNLF), and the adaptive correction filter (ALF).

That is to say, whether the learning-based scaling factor module (NNSF) is turned on may be determined by the encoder, and thus in the embodiments of the present application, a frame-level and block (e.g., CTU)-level on/off control can be set for the scaling factor module. At the coding side, by comparing the picture rate distortion cost before and after the scaling factor processing, it may be determined whether to turn on the scaling factor module (NNSF), that is, whether to use the scaling factor generated by the neural network, and the on/off status of the scaling factor module (NNSF) will be coded into the bitstream for the decoder to read. At the decoder side, in a case where it is parsed that the scaling factor module is turned on, that is, in a case where it is determined to use the scaling factor generated by the neural network, the scaling factor of the picture block is used to optimize the picture block; and in a case where it is parses that the scaling factor module is turned off, that is, in a case where it is determined not to use the scaling factor generated by the neural network, the related processing of the scaling factor is not performed.

Further, in the embodiments of the present application, the scaling factor obtained based on the scaling factor generation network prediction may be a learning-based scaling factor of the picture block, which is used to perform the correction of the residual between the filtered picture block output by the NNLF and the reconstructed picture block output by the SAO, so that the reconstructed block of the current block finally obtained is closer to the original picture, so as to obtain the better coding performance and solve the problems existing in the traditional scaling factor to a certain extent.

It can be understood that in the embodiments of the present application, the network structure of the scaling factor generation network may be a relatively simple convolutional neural network, with the input being the filtered picture block output by the NNLF and the reconstructed picture block output by the SAO, and the output being the scaling factor of the current block (e.g., CTU). That is, the learning-based scaling factor of the current block is predicted by the neural network.

Further, in the embodiments of the present application, the technical solution of using the neural network (the scaling factor generation network) to predict the scaling factor of the picture block is implemented at both the coding and decoding sides and may act in the loop filtering module.

Exemplarily, in the embodiments of the present application, when processing the loop filtering module, the encoder processes it according to the specified filter order. When coming to the scaling factor module, it is first determined whether the neural network scaling factor module may be used in the current sequence according to the sequence-level flag nnsf_enable_flag (the third flag information), that is, it is determined whether to use the scaling factor generated by the neural network for at least one picture frame of the current sequence according to the third flag information. In a case where the nnsf_enable_flag is "1", it is determined that the current sequence is processed with the scaling factor module, that is, it is determined that the third flag information indicates that the scaling factor generated by the neural network is used for the at least one picture frame in the current sequence; and in a case where the nnsf_enable_flag is "0", it is determined that the scaling factor module is not used for the current sequence, that is, it is determined that the third flag information indicates that the scaling factor generated by the neural network is not used for all picture frames in the current sequence, and then ALF processing may continue.

Accordingly, in the embodiments of the present application, after determining that the third flag information indicates that the neural scaling factor generated by the network is used for at least one picture frame of the current sequence, for the current frame of the current sequence, it may be selected to traverse all coding picture blocks of all color components, try neural network scaling factor processing based on each coding block, and compare it with the picture block before processing, calculate the cost (i.e., the cost parameter), and then set the third flag information of the picture block under the color component according to the cost parameter.

Exemplarily, in the present application, it is assumed that the cost parameter of the picture block is the rate-distortion cost $D$ , which is expressed as the following formula:

$$D = D_{nnsf} - D_{before} \tag{10}$$

where $D_{nnsf}$ is a distortion after processing, and the $D_{before}$ is the distortion before processing.

In a case where the cost after processing is less than the cost before processing, i.e., $D$ <0, the second flag information of the picture block may be set to the first value (e.g., 1), that is, the value of the block-level flag patch_nnsf_enable_flag[compIdx][ctuIdx] is set to "1"; and in a case where the cost after processing is greater than or equal to the cost before processing, i.e., $D$ >=0, the second flag information of the picture block may be set to the second value (e.g., 0), that is, the value of the block-level flag patch_nnsf_enable_flag[compIdx][ctuIdx] is set to "0". In a case where all picture blocks of the current color component in the current frame have been traversed, the next color component in the current frame may be loaded for processing.

Further, in the embodiments of the present application, for the current color component of the current frame of the current sequence, in a case where the pieces of second flag information of all picture blocks are all the second value, that is, the values of patch_nnsf_enable_flag[compIdx][ctuIdx] of all picture blocks are all "0", the value of the first flag information of the current color component of the current frame of the current sequence may be set to the second value (e.g., 0), that is, the value of the picture-level flag picture_nnsf_enable_flag[compIdx] is set to "0"; and in a case where the pieces of second flag information of all picture blocks are not all the second value, that is, the values of patch_nnsf_enable_flag[compIdx][ctuIdx] of all picture blocks are not all "0", the value of the first flag information of the current color component of the current frame of the current sequence may be set to the first value (e.g., 1), that is, the value of the picture-level flag picture_nnsf_enable_flag[compIdx] is set to "1". In a case where all color components of the current frame have been traversed, the next frame in the current sequence may be loaded for processing.

It can be understood that in the embodiments of the present application, after all picture blocks in the current color component of the current frame of the current sequence are traversed, a next color component of the current frame of the current sequence may be loaded, and then all color components of the current frame of the current sequence may be traversed according to the above method, and after a decision of the neural network scaling factor module of the current frame is completed, a next frame of the current sequence is loaded for processing.

Further, in the embodiments of the present application, as shown in FIG. 11, the loop filtering module mainly includes the deblocking filter (DBF), the sample adaptive offset (SAO), the neural network-based loop filter (NNLF), the neural network-based scaling factor (NNSF) module, the adaptive loop filter (ALF) and other tools.

The network structure of the NNSF module (the scaling factor generation network) here may be composed of a relatively simple convolutional neural network, where the NNSF module may output the scaling factor of the picture block in the form of a two-dimensional matrix as shown in FIG. 8 above, or may output the scaling factor of the picture block in the form of a one-dimensional variable as shown in FIG. 9 above.

Exemplarily, in the embodiments of the present application, for one picture block, a reconstructed picture block corresponding to the picture block output by the SAO may be input into both the NNLF and NNSF modules, and then the NNLF outputs a filtered picture block corresponding to the picture block. The filtered picture block is input into the NNSF module, and then a scaling factor corresponding to the picture block and generated by the neural network may be output, so that the scaling factor may be used to perform the correction of a residual between the filtered picture block and the reconstructed picture block, and finally a reconstructed block corresponding to the picture block is output, and the reconstructed block continues to be input into the ALF to perform subsequent filtering processing.

It can be understood that in the embodiments of the present application, after determining the first flag information and the second flag information, the encoder may write the first flag information and the second flag information into the bitstream and transmit them to the decoding side, so that the decoder may determine the first flag information and the second flag information by decoding the bitstream.

Further, in the embodiments of the present application, the sequence header definition Syntaxis shown in Table 1. In syntax, an enable flag of the scaling factor generated by the neural network is nnsf_enable_flag, that is, the third flag information used to indicate whether to use the scaling factor generated by the neural network for the current sequence is the nnsf_enable_flag.

For example, in a case where a value of nnsf_enable_flag is 1, it may be determined that the current sequence is processed with the scaling factor module, that is, it may be determined that the scaling factor generated by the neural network may be used for the current sequence; and in a case where the value of nnsf_enable_flag is 0, it may be determined that the scaling factor generated by the neural network is not used for the current sequence.

Further, in the embodiments of the present application, a picture header definition syntax is shown in Table 2. In syntax, in a case where a value of an enable flag of the scaling factor generated by the neural network, i.e., the nnsf_enable_flag, is 1, that is, in a case where the third flag information indicates that the scaling factor generated by the neural network is used for the current sequence, it may be determined that an enable flag of the picture-level neural network scaling factor is picture_nnsf_enable_flag[compIdx], that is, the first flag information used to indicate whether the scaling factor generated by the neural network is used for the current color component of the current frame of the current sequence is the picture_nnsf_enable_flag[compIdx].

For example, in a case where the value of the picture_nnsf_enable_flag[compIdx] is 1, it may be determined that the current color component of the current frame of the current sequence is processed with the scaling factor module, that is, it may be determined that the scaling factor generated by the neural network may be used for the current color component of the current frame of the current sequence; and in a case where the value of the picture_nnsf_enable_flag [compIdx] is 0, it may be determined that the current color component of the current frame of the current sequence does not use the scaling factor generated by the neural network.

Further, in the embodiments of the present application, a slice definition syntax is shown in Table 3. In syntax, in a case where a value of an enable flag of the scaling factor generated by the neural network, i.e., the nnsf_enable_flag, is 1, that is, in a case where the third flag information indicates that the scaling factor generated by the neural network is used for the current sequence, and at the same time, it is determined that the value of the picture-level neural network scaling factor, i.e., the enable flag picture_nnsf_enable_flag[compIdx], is 1, that is, in a case where the first flag information indicates that the scaling factor generated by the neural network is used for the current color component of the current frame of the current sequence, it may be determined that the block-level neural network scaling factor enable flag is patch_nnsf_enable_flag[compIdx][ctuIdx], that is, the second flag information used to indicate whether the scaling factor generated by the neural network is used for the current block of the current color component of the current frame of the current sequence is the patch_nnsf_enable_flag[compIdx] [ctuIdx].

For example, in a case where the value of the patch_nnsf_enable_flag[compIdx][ctuIdx] is 1, it may be determined that the current block of the current color component of the current frame of the current sequence is processed with the scaling factor module, that is, it may be determined that the scaling factor generated by the neural network may be used for the current block of the current color component of the current frame of the current sequence; and in a case where the value of the patch_nnsf_enable_flag[compIdx][ctuIdx] is 0, it may be determined that the scaling factor generated by the neural network is not used for the current block of the current color component of the current frame of the current sequence.

In summary, in the embodiments of the present application, through the coding method proposed in the above step 201 to step 206, in one aspect, the scaling factor of the picture block may be predicted by the scaling factor generation network, that is, the scaling factor corresponding to the picture block is generated, so the calculation method is flexible, and the picture block may be better optimized and corrected, thereby improving the coding performance; in another aspect, the prediction of the scaling factor may be performed only based on the picture block that enables the scaling factor generated using the neural network, without traversing all picture blocks, thereby solving the delay problem; and in yet another aspect, the scaling factor generation network is used at both the coding and decoding sides to predict the scaling factor of the picture block, and the scaling factor does not need to be coded and transmitted, which saves the number of bits required for coding the scaling factor and improves the coding efficiency.

The embodiments of the present application provide a coding method, the encoder determines first flag information; the encoder determines, in a case where the first flag information indicates that a scaling factor generated by a neural network is used for a current color component of a current frame of a current sequence, the second flag information; the encoder determines, in a case where second flag information indicates that the scaling factor generated by the neural network is used for a current block of the current color component, a scaling factor corresponding to the current block using the scaling factor generation network, where the scaling factor generation network is used to predict a scaling factor of a picture block; and the encoder determines the reconstructed block of the current block according to the scaling factor. That is to say, in the embodiments of the present application, the encoder may use the scaling factor generation network at the coding side to predict and obtain a learning-based scaling factor of the picture block, for correcting the residual corresponding to the picture block to obtain a reconstructed block that is closer to the original picture, which enhance the flexibility and applicability of the scaling factor, and are capable of improving the coding performance while improving the coding efficiency.

Based on the above embodiments, in yet another embodiment of the present application, FIG. 13 is a first schematic diagram of compositional structures of a decoder proposed in the embodiments of the present application. As shown in FIG. 13, the decoder 300 proposed in the embodiments of the present application may include a decoding part 301, and a first determination part 302, where

the decoding part 301 is configured to decode a bitstream; and
the first determination part 302 is configured to: determine first flag information; in a case where the first flag information indicates that a scaling factor generated by a neural network is used for a current color component of a current frame of a current sequence, determine second flag information; in a case where the second flag information indicates that a scaling factor generated by a neural network is used for a current block of the current color component, determine the scaling factor corresponding to the current block using a scaling factor generation network, where the scaling factor generation network is used to predict a scaling factor of a picture block; and determine a reconstructed block of the current block according to the scaling factor.

FIG. 14 is a second schematic diagram of compositional structures of a decoder proposed in the embodiments of the present application. As shown in FIG. 14, the decoder 300 proposed in the embodiments of the present application may include a first processor 303, a first memory 304 having stored instructions executable by the first processor 303, a first communication interface 305, and a first bus 306 for connecting the first processor 303, the first memory 304 and the first communication interface 305.

Further, in the embodiments of the present application, the first processor 303 is used to: decode a bitstream and determine first flag information; in a case where the first flag information indicates that a scaling factor generated by a neural network is used for a current color component of a current frame of a current sequence, determine second flag information; in a case where the second flag information indicates that the scaling factor generated by the neural network is used for a current block of the current color component, determine a scaling factor corresponding to the current block using a scaling factor generation network, where the scaling factor generation network is used to predict a scaling factor of a picture block; and determine a reconstructed block of the current block according to the scaling factor.

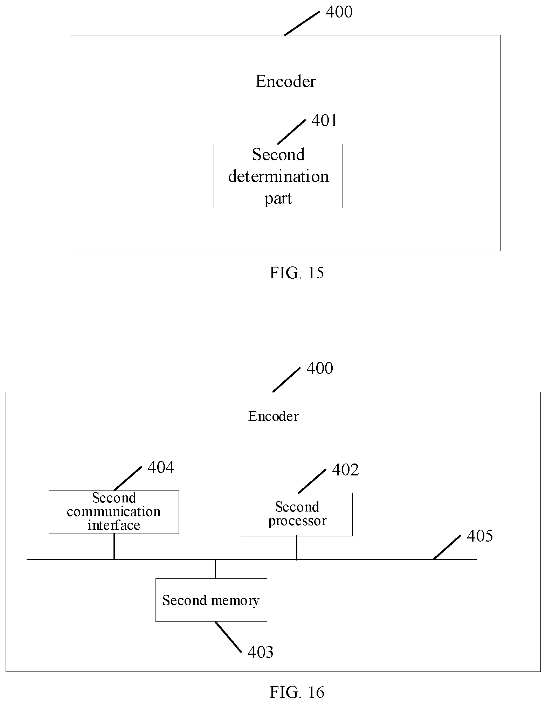

FIG. 15 is a first schematic diagram of compositional structures of an encoder proposed in the embodiments of the present application. As shown in FIG. 15, the encoder 400 proposed in the embodiments of the present application may include a second determination part 401, where

the second determination part 401 is configured to: determine first flag information; in a case where the first flag information indicates that a scaling factor generated by a neural network is used for a current color component of a current frame of a current sequence, determine second flag information ; in a case where the second flag information indicates that the scaling factor generated by the neural network is used for a current block of the current color component, determine a scaling factor corresponding to the current block using a scaling factor generation network, where the scaling factor generation network is used to predict a scaling factor of a picture block; and determine a reconstructed block of the current block according to the scaling factor.

FIG. 16 is a second schematic diagram of compositional structures of an encoder proposed in the embodiments of the present application. As shown in FIG. 16, the encoder 400 proposed in the embodiments of the present application may include a second processor 402, a second memory 403 having stored instructions executable by the second processor 402, a second communication interface 405, and a second bus 406 for connecting the second processor 402, the second memory 403 and the second communication interface 405.

Further, in the embodiments of the present application, the second processor 402 is used to: determine first flag information; in a case where the first flag information indicates that a scaling factor generated by a neural network is used for a current color component of a current frame of a current sequence, determine second flag information; in a case where the second flag information indicates that the scaling factor generated by the neural network is used for a current block of the current color component, determine a scaling factor corresponding to the current block using a scaling factor generation network, where the scaling factor generation network is used to predict a scaling factor of a picture block; and determine a reconstructed block of the current block according to the scaling factor.

In addition, various functional modules in the embodiments may be integrated into one processing unit, or various units may exist separately in physical terms, or two or more units may be integrated into one unit. The above integrated units may be implemented in the form of hardware or in the form of software function modules.

The integrated units, when implemented in the form of a software function module rather than sold or used as a stand-alone product, may be stored in a computer-readable storage medium. Based on such understanding, the technical solutions of the embodiment essentially or part making contributions to the prior art, or all or part of the technical solutions may be embodied in the form of a software product. The computer software product is stored in a storage medium, including several instructions for enabling a computer device (which may be a personal computer, a server, or a network device) or a processor to execute all or part of the steps of the method of the embodiments. The foregoing storage medium includes various media capable of storing program codes, such as a U disk, a mobile hard disk, a read-only memory (ROM), a random access memory (RAM), a magnetic disk or optical disk, or the like.

The embodiments of the present application provide an encoder and a decoder. The decoder decodes a bitstream and determines first flag information; the decoder determines, in a case where the first flag information indicates that a scaling factor generated by a neural network is used for a current color component of a current frame of a current sequence, second flag information; the decoder determines, in a case where the second flag information indicates that a scaling factor generated by a neural network is used for a current block of the current color component, a scaling factor corresponding to the current block using a scaling factor generation network, where the scaling factor generation network is used to predict a scaling factor of a picture block; and the decoder determines a reconstructed block of the current block according to the scaling factor. The encoder determines the first flag information; the encoder determines, in a case where the first flag information indicates that the scaling factor generated by the neural network is used for the current color component of the current frame of the current sequence, second flag information; the encoder determines, in a case where the second flag information indicates that the scaling factor generated by the neural network is used for the current block of the current color component, the scaling factor corresponding to the current block using the scaling factor generation network, where the scaling factor generation network is used to predict the scaling factor of the picture block; and the encoder determines the reconstructed block of the current block according to the scaling factor. That is to say, in the embodiments of the present application, the codec may use the scaling factor generation network at both the coding and decoding sides to predict and obtain a learning-based scaling factor of the picture block, for correcting the residual corresponding to the picture block to obtain a reconstructed block that is closer to the original picture, which enhance the flexibility and applicability of the scaling factor, and are capable of improving the coding performance while improving the coding efficiency

The embodiments of the present application provide a computer-readable storage medium, where the computer-readable storage medium has stored thereon a program. The program, when executed by a processor, implements the method described in the above embodiments.

Specifically, program instructions corresponding to a decoding method in the embodiments may be stored on a storage medium such as an optical disk, a hard disk, or a U disk. When the program instructions corresponding to the decoding method in the storage medium are read or executed by an electronic device, the following steps are included:

decoding a bitstream, and determining first flag information;
determining, in a case where the first flag information indicates that a scaling factor generated by a neural network is used for a current color component of a current frame of a current sequence, second flag information;
determining, in a case where the second flag information indicates that a scaling factor generated by a neural network is used for a current block of the current color component, a scaling factor corresponding to the current block using a scaling factor generation network, where the scaling factor generation network is used to predict a scaling factor of a picture block; and
determining a reconstructed block of the current block according to the scaling factor.

Specifically, program instructions corresponding to a coding method in the embodiments may be stored on a storage medium such as an optical disk, a hard disk, or a U disk. When the program instructions corresponding to the coding method in the storage medium are read or executed by an electronic device, the following steps are included:

determining first flag information;
determining, in a case where the first flag information indicates that a scaling factor generated by a neural network is used for a current color component of a current frame of a current sequence, second flag information;
determining, in a case where the second flag information indicates that the scaling factor generated by the neural network is used for a current block of the current color component, a scaling factor corresponding to the current block using a scaling factor generation network, where the scaling factor generation network is used to predict a scaling factor of a picture block; and
determining a reconstructed block of the current block according to the scaling factor.

Those skilled in the art should understand that the embodiments of the present application may be provided as methods, systems, or computer program products. Therefore, the present application may take the form of a hardware embodiment, a software embodiment, or an embodiment combining software and hardware aspects. Moreover, the present application may take the form of a computer program product implemented on one or more computer-usable storage media (including but not limited to a magnetic disk memory and an optical memory, etc.) containing computer-usable program codes therein.

The present application is described with reference to schematic flowcharts and/or block diagrams of implementations of methods, devices (systems), and computer program products according to the embodiments of the present application. It should be understood that each process and/or block in the schematic flowcharts and/or block diagrams, as well as combinations of processes and/or blocks in the schematic flowcharts and/or block diagrams, may be implemented by computer program instructions. These computer program instructions may be provided to a processor of a general-purpose computer, a special-purpose computer, an embedded processor or other programmable data processing devices to produce a machine, so that the instructions executed by the processor of the computer or other programmable data processing devices produce a device for implementing the functions specified in one or more processes in the schematic flowcharts and/or one or more blocks in the block diagrams.

These computer program instructions may also be stored in a computer-readable memory capable of directing a computer or other programmable data processing devices to operate in a specific manner, so that the instructions stored in the computer-readable memory produce a manufactured product including an instruction device that implements the functions specified in implementing one or more processes in the schematic flowcharts and/or one or more blocks in the block diagrams.

These computer program instructions may also be loaded onto a computer or other programmable data processing devices, so that a series of operational steps are executed on the computer or other programmable devices to produce a computer-implemented process, whereby the instructions executed on the computer or other programmable device provide steps for implementing the functions specified in one or more processes in the flowchart and/or one or more blocks in the block diagram.

The above description is only preferred embodiments of the present application and is not intended to limit the protection scope of the present application.

## INDUSTRIAL APPLICABILITY

The embodiments of the present application provide coding and decoding methods, a decoder, an encoder, and a storage medium. The decoder decodes a bitstream and determines first flag information; the decoder determines, in a case where the first flag information indicates that a scaling factor generated by a neural network is used for a current color component of a current frame of a current sequence, second flag information; the decoder determines, in a case where the second flag information indicates that a scaling factor generated by a neural network is used for a current block of the current color component, a scaling factor corresponding to the current block using a scaling factor generation network, where the scaling factor generation network is used to predict a scaling factor of a picture block; and the decoder determines a reconstructed block of the current block according to the scaling factor. The encoder determines the first flag information; the encoder determines, in a case where the first flag information indicates that the scaling factor generated by the neural network is used for the current color component of the current frame of the current sequence, second flag information; the encoder determines, in a case where the second flag information indicates that the scaling factor generated by the neural network is used for the current block of the current color component, the scaling factor corresponding to the current block using the scaling factor generation network, where the scaling factor generation network is used to predict the scaling factor of the picture block; and the encoder determines a reconstructed block of the current block. That is to say, in the embodiments of the present application, the codec may use the scaling factor generation network at both the coding and decoding sides to predict and obtain a learning-based scaling factor of the picture block, for correcting the residual corresponding to the picture block to obtain a reconstructed block that is closer to the original picture, which enhance the flexibility and applicability of the scaling factor, and are capable of improving the coding performance while improving the coding efficiency.

## Claims

**1.** A decoding method, applied to a decoder, comprising:

decoding a bitstream, and determining first flag information;
determining, in a case where the first flag information indicates that a scaling factor generated by a neural network is used for a current color component of a current frame of a current sequence, second flag information;
determining, in a case where the second flag information indicates that the scaling factor generated by the neural network is used for a current block of the current color component, a scaling factor corresponding to the current block using a scaling factor generation network, wherein the scaling factor generation network is used to predict a scaling factor of a picture block; and
determining a reconstructed block of the current block according to the scaling factor.

**2.** The method according to claim 1, wherein determining the scaling factor corresponding to the current block using the scaling factor generation network comprises:
inputting a filtered picture block and a reconstructed picture block corresponding to the current block into the scaling factor generation network, and outputting the scaling factor.

3. The method according to claim 2, wherein
a network structure of the scaling factor generation network comprises at least one of a convolutional layer, a nonlinear activation function PReLU layer, a concat layer, a max pooling layer, and a full connect layer.

4. The method according to claim 3, wherein
a data form of the scaling factor is a two-dimensional matrix or a one-dimensional variable.

5. The method according to claim 4, wherein determining the reconstructed block of the current block according to the scaling factor comprises:
determining the reconstructed block of the current block according to the scaling factor, the filtered picture block and the reconstructed picture block.

6. The method according to claim 5, wherein determining the reconstructed block of the current block according to the scaling factor, the filtered picture block and the reconstructed picture block comprises:

determining a residual value corresponding to the current block according to the filtered picture block and the reconstructed picture block;
correcting the residual value according to the scaling factor to obtain a correction result corresponding to the current block; and
determining the reconstructed block of the current block according to the correction result and the reconstructed picture block.

7. The method according to claim 4, wherein determining the scaling factor corresponding to the current block using the scaling factor generation network comprises:
inputting the filtered picture block, the reconstructed picture block and feature information corresponding to the current block into the scaling factor generation network, and outputting the scaling factor, wherein the feature information comprises at least one of block partitioning information, prediction information and quantization parameter information.

8. The method according to claim 1, wherein the method further comprises:

determining third flag information; and
performing, in a case where the third flag information indicates that the scaling factor generated by the neural network is used for the current sequence, a determination process of the first flag information.

9. The method according to claim 8, wherein

in a case where a value of the third flag information is a first value, the scaling factor generated by the neural network is used for the current sequence; and/or
in a case where the value of the third flag information is a second value, the scaling factor generated by the neural network is not used for the current sequence.

10. The method according to claim 8, wherein

in a case where a value of the first flag information is a first value, the scaling factor generated by the neural network is used for the current color component; and/or
in a case where the value of the first flag information is a second value, the scaling factor generated by the neural network is not used for the current color component.

11. The method according to claim 8, wherein

in a case where a value of the second flag information is a first value, the scaling factor generated by the neural network is used for the current block; and/or
in a case where the value of the second flag information is a second value, the scaling factor generated by the neural network is not used for the current block.

12. The method according to any one of claims 9 to 11, wherein

the first value is 1, and the second value is 0; or
the first value is set to true, and the second value is set to false.

**13.** The method according to claim 4, wherein the method further comprises:

training the scaling factor generation network using a scaling factor set to determine a data label from the scaling factor set;
determining a loss of the scaling factor generation network according to output data of the scaling factor generation network and the data label; and
updating a network parameter of the scaling factor generation network based on the loss.

**14.** A coding method, applied to an encoder, comprising:

determining first flag information;
determining, in a case where the first flag information indicates that a scaling factor generated by a neural network is used for a current color component of a current frame of a current sequence, second flag information;
determining, in a case where the second flag information indicates that the scaling factor generated by the neural network is used for a current block of the current color component, a scaling factor corresponding to the current block using a scaling factor generation network, wherein the scaling factor generation network is used to predict a scaling factor of a picture block; and
determining a reconstructed block of the current block according to the scaling factor.

**15.** The method according to claim 14, wherein determining the scaling factor corresponding to the current block using the scaling factor generation network comprises:
inputting a filtered picture block and a reconstructed picture block corresponding to the current block into the scaling factor generation network, and outputting the scaling factor.

**16.** The method according to claim 15, wherein
a network structure of the scaling factor generation network comprises at least one of a convolutional layer, a nonlinear activation function PreLU layer, a concat layer, a max pooling layer, and a full connect layer.

**17.** The method according to claim 3, wherein
a data form of the scaling factor is a two-dimensional matrix or a one-dimensional variable.

**18.** The method according to claim 17, wherein determining the reconstructed block of the current block according to the scaling factor comprises:
determining the reconstructed block of the current block according to the scaling factor, the filtered picture block and the reconstructed picture block.

**19.** The method according to claim 18, wherein determining the reconstructed block of the current block according to the scaling factor, the filtered picture block and the reconstructed picture block comprises:

determining a residual value corresponding to the current block according to the filtered picture block and the reconstructed picture block;
correcting the residual value according to the scaling factor to obtain a correction result corresponding to the current block; and
determining the reconstructed block of the current block according to the correction result and the reconstructed picture block.

**20.** The method according to claim 17, wherein determining the scaling factor corresponding to the current block using the scaling factor generation network comprises:
inputting the filtered picture block, the reconstructed picture block and feature information corresponding to the current block into the scaling factor generation network, and outputting the scaling factor, wherein the feature information comprises at least one of block partitioning information, prediction information and quantization parameter information.

**21.** The method according to claim 14, wherein the method further comprises:

determining third flag information;
determining, in a case where the third flag information indicates that the scaling factor generated by the neural network is used for the current sequence, a determination process of the first flag information.

**22.** The method according to claim 21, wherein:

in a case where a value of the third flag information is a first value, the scaling factor generated by the neural network is used for the current sequence; and/or
in a case where the value of the third flag information is a second value, the scaling factor generated by the neural network is not used for the current sequence.

**23.** The method according to claim 22, wherein the method further comprises:

using, in a case where the third flag information indicates that the scaling factor generated by the neural network is used for the current sequence, the scaling factor generated by the neural network for each picture block of the current color component of the current frame of the current sequence to obtain a cost parameter of each picture block;
setting, in a case where a cost parameter of a picture block indicates that the scaling factor generated by the neural network is used for the picture block, a value of second flag information of the picture block to the first value; and
setting, in a case where a cost parameter of a picture block indicates that the scaling factor generated by the neural network is not used for the picture block, a value of second flag information of the picture block to the second value.

**24.** The method according to claim 23, wherein the method further comprises:

setting, in a case where pieces of second flag information of all picture blocks of the current color component are not all the second value, a value of the first flag information of the current color component to the first value; and
setting, in a case where the pieces of second flag information of all picture blocks of the current color component are all the second value, the value of the first flag information of the current color component to the second value.

**25.** The method according to any one of claims 22 to 24, wherein

the first value is 1, and the second value is 0; or
the first value is set to true, and the second value is set to false.

**26.** The method according to claim 17, wherein the method further comprises:

training the scaling factor generation network using a scaling factor set to determine a data label from the scaling factor set;
determining a loss of the scaling factor generation network according to output data of the scaling factor generation network and the data label; and
updating a network parameter of the scaling factor generation network based on the loss.

**27.** The method according to claim 14, wherein the method further comprises:
writing the first flag information and the second flag information into a bitstream.

**28.** A decoder, comprising: a decoding part, and a first determination part, wherein

the decoding part is configured to decode a bitstream; and
the first determination part is configured to: determine first flag information; in a case where the first flag information indicates that a scaling factor generated by a neural network is used for a current color component of a current frame of a current sequence, determine second flag information; in a case where the second flag information indicates that the scaling factor generated by the neural network is used for a current block of the current color component, determine a scaling factor corresponding to the current block using a scaling factor generation network, wherein the scaling factor generation network is used to predict a scaling factor of a picture block; and determine a reconstructed block of the current block according to the scaling factor.

**29.** A decoder, wherein the encoder comprises a first processor, and a first memory having stored instructions executable by the first processor, and wherein the instructions, when being executed by the first processor, cause the method according to any one of claims 1 to 13 to be implemented.

**30.** An encoder, comprising: a second determination part, wherein
the second determination part is configured to: determine first flag information; in a case where the first flag information indicates that a scaling factor generated by a neural network is used for a current color component of a current frame of a current sequence, determine second flag information; in a case where the second flag information indicates that the scaling factor generated by the neural network is used for a current block of the current color component, determine a scaling factor corresponding to the current block using a scaling factor generation network, wherein the scaling factor generation network is used to predict a scaling factor of a picture block; and determine a reconstructed block of the current block according to the scaling factor.

**31.** An encoder, wherein the decoder comprises a second processor, and a second memory having stored instructions executable by the second processor, and wherein the instructions, when being executed by the second processor, implement the method according to any one of claims 14 to 27.

**32.** A computer storage medium, having stored a computer program, wherein the computer program implements the method according to any one of claims 1 to 13 when being executed by a first processor, or implements the method according to any one of claims 14 to 27 when being executed by a second processor.

Input video
Residual
Transform/
Quantization
Quantization
coefficient
Entropy
coding
Intra
prediction
Inverse quantization/
Inverse transform
Predictor
Motion estimation/
Motion compensation
In-loop filtering
Decoded
picture buffer

FIG. 1

N×N
Y×4+U+V
3x3 conv 3x3x6x96
LeakyReLU
3x3 conv 3x3x96x96
LeakyReLU
...
3x3 conv 3x3x96x96
LeakyReLU
3x3 conv 3x3x96x6
+
Scaled Residues
scaling factors
N×N
Y×4+U+V

FIG. 2

rec_yuv
pred_yuv
par_yuv
Base QP
Slice QP
Conv
ReLU
cat
ReLU
Stride=2
N ResBlocks
PixelShuffle
output yuv
ResBlock
ReLU
CBAM

FIG. 3

100
Input video
101
Partitioning unit
+
107
-
108
Transform unit
109
Quantization unit
115
Entropy coding unit
Output bitstream
102
Prediction unit
Block partitioning unit 103
Motion estimation unit 104
Motion compensation unit 105
Intra prediction unit 106
110
Inverse quantization unit
111
Inverse transform unit
114
Decoded picture buffer unit
113
Filtering unit
+
+
112

FIG. 4

200
Input bitstream
201
Parsing unit
202
Prediction unit
Motion compensation unit 203
Intra prediction unit 204
205
Inverse quantization unit
206
Inverse transform unit
+
+
207
208
Filtering unit
209
Decoded picture buffer unit
Output video

FIG. 5

Decode a bitstream, and determine first flag information
101
Determine, in a case where the first flag information indicates that a scaling factor generated by a neural network is used for a current color component of a current frame of a current sequence, second flag information
102
Determine, in a case where the second flag information indicates that the scaling factor generated by the neural network is used for a current block of the current color component, a scaling factor corresponding to the current block using a scaling factor generation network
103
Determine, a reconstructed block of the current block according to the scaling factor
104

FIG. 6

Determine third flag information
105
Perform, in a case where the third flag information indicates that a scaling factor generated by a neural network is used for a current sequence, the determination process of the first flag information
106
Decode a bitstream, and determine first flag information
101
Determine, in a case where the first flag information indicates that the scaling factor generated by the neural network is used for a current color component of a current frame of the current sequence, second flag information
102
Determine, in a case where the second flag information indicates that the scaling factor generated by the neural network is used for a current block of the current color component, a scaling factor corresponding to the current block using a scaling factor generation network
103
Determine a reconstructed block of the current block according to the scaling factor
104

FIG. 7

Filtered picture block
Reconstructed picture block
3x3 conv
PReLU
3x3 conv
PReLU
Concat
3x3 conv
PReLU
3x3 conv
PReLU
3x3 conv
Scaling factor generated by a neural network

FIG. 8

Filtered picture block
Reconstructed picture block
3x3 conv
PReLU
3x3 conv
PReLU
Concat
3x3 conv
MaxPool2d
3x3 conv
MaxPool2d
3x3 conv
MaxPool2d
Full Connect
PReLU
Full Connect
Scaling factor generated by a neural network

FIG. 9

Input video
Residual
Transform/ Quantization
Quantization coefficient
Entropy coding
Intra prediction
Inverse quantization/ Inverse transform
Predictor
Motion estimation/ Motion compensation
In-loop filter
Decoded picture buffer
In-loop filter
DBF
SAO
NNLF
NNSF
ALF

FIG. 10

In-loop filter
DBF
SAO
Reconstructed picture block
NNLF
Filtered picture block
NNSF
Reconstructed block
ALF
Scaling factor

FIG. 11

Determine first flag information
201
Determine, in a case where the first flag information indicates that a scaling factor generated by a neural network is used for a current color component of a current frame of a current sequence, second flag information
202
Determine, in a case where the second flag information indicates that the scaling factor generated by the neural network is used for a current block of the current color component, a scaling factor corresponding to the current block using the scaling factor generation network
203
Determine, a reconstructed block of the current block according to the scaling factor
204

FIG. 12

300
Decoder
301
302
Decoding part
First determination part

FIG. 13

300
Decoder
305
303
First communication interface
First processor
306
First memory
304

FIG. 14

400
Encoder
401
Second determination part

FIG. 15

400
Encoder
404
Second communication interface
402
Second processor
405
Second memory
403

FIG. 16

**INTERNATIONAL SEARCH REPORT**

International application No.
**PCT/CN2022/096929**

**A. CLASSIFICATION OF SUBJECT MATTER**

H04N 19/82(2014.01)i；H04N 19/117(2014.01)i；H04N 19/176(2014.01)i

According to International Patent Classification (IPC) or to both national classification and IPC

**B. FIELDS SEARCHED**

Minimum documentation searched (classification system followed by classification symbols)

H04N19/-

Documentation searched other than minimum documentation to the extent that such documents are included in the fields searched

Electronic data base consulted during the international search (name of data base and, where practicable, search terms used)

CNTXT; ENTXTC; CNKI; CNABS: CNN, 滤波图像, 颜色分量, DNN, 环路滤波, 色彩, 重建图像, 神经网络, 残差, 差, 标识, 机器学习, 缩放, 伸缩, 标志, 修正, 细化; USTXT; VEN; EPTXT; WOTXT; IEEE: scal+, CNN, DNN, NN, VVS, Filter, loop, colour, reconstruct+, flag, modif+, refin+, residual

**C. DOCUMENTS CONSIDERED TO BE RELEVANT**

| Category* | Citation of document, with indication, where appropriate, of the relevant passages | Relevant to claim No. |
|---|---|---|
| X | US 2022103816 A1 (QUALCOMM INCORPORATED) 31 March 2022 (2022-03-31) description, paragraphs 0071-0230, and figures 1-11 | 1-32 |
| A | CN 111314711 A (UNIVERSITY OF ELECTRONIC SCIENCE AND TECHNOLOGY OF CHINA) 19 June 2020 (2020-06-19) entire document | 1-32 |
| A | CN 111133756 A (MEDIATEK INC.) 08 May 2020 (2020-05-08) entire document | 1-32 |
| A | US 2021329286 A1 (ALIBABA GROUP HOLDING LIMITED) 21 October 2021 (2021-10-21) entire document | 1-32 |
| A | CN 113519162 A (ZTE CORP.) 19 October 2021 (2021-10-19) entire document | 1-32 |
| A | CN 113497941 A (ZHEJIANG DAHUA TECHNOLOGY CO., LTD.) 12 October 2021 (2021-10-12) entire document | 1-32 |

☐ Further documents are listed in the continuation of Box C. ☑ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **23 August 2022** | **18 January 2023** |

Name and mailing address of the ISA/CN

**China National Intellectual Property Administration (ISA/CN)**
**No. 6, Xitucheng Road, Jimenqiao, Haidian District, Beijing 100088, China**

Facsimile No. **(86-10)62019451**

Authorized officer

Telephone No.

Form PCT/ISA/210 (second sheet) (January 2015)

**INTERNATIONAL SEARCH REPORT**
**Information on patent family members**

International application No.
**PCT/CN2022/096929**

| Patent document cited in search report | | | Publication date (day/month/year) | Patent family member(s) | | | Publication date (day/month/year) |
|---|---|---|---|---|---|---|---|
| US | 2022103816 | A1 | 31 March 2022 | TW | 202213996 | A | 01 April 2022 |
| | | | | WO | 2022072239 | A1 | 07 April 2022 |
| CN | 111314711 | A | 19 June 2020 | US | 2021392382 | A1 | 16 December 2021 |
| | | | | WO | 2021196822 | A1 | 07 October 2021 |
| | | | | CN | 111314711 | B | 14 May 2021 |
| CN | 111133756 | A | 08 May 2020 | TW | 201924342 | A | 16 June 2019 |
| | | | | WO | 2019072097 | A1 | 18 April 2019 |
| | | | | US | 2020252654 | A1 | 06 August 2020 |
| | | | | EP | 3685577 | A1 | 29 July 2020 |
| | | | | TW | 709329 | B1 | 01 November 2020 |
| | | | | EP | 3685577 | A4 | 28 July 2021 |
| | | | | CN | 111133756 | B | 19 April 2022 |
| US | 2021329286 | A1 | 21 October 2021 | WO | 2021211966 | A1 | 21 October 2021 |
| CN | 113519162 | A | 19 October 2021 | WO | 2020181434 | A1 | 17 September 2020 |
| | | | | KR | 20210134771 | A | 10 November 2021 |
| | | | | US | 2021409779 | A1 | 30 December 2021 |
| | | | | EP | 3935856 | A1 | 12 January 2022 |
| CN | 113497941 | A | 12 October 2021 | | None | | |

Form PCT/ISA/210 (patent family annex) (January 2015)